# EUROPEAN PATENT APPLICATION

(11) **EP 4 778 665 A1**
(43) Date of publication of application: **22.07.2026**
(21) Application number: 24865486.5
(22) Date of filing: 11.09.2024
(51) Int. Cl.: B23K 26/142, B23K 26/16

(54) **LASER PROCESSING DEVICE AND LASER PROCESSING METHOD**

(30) Priority: 14.09.2023 JP 2023149623
(71) Applicant: Nippon Steel Corporation, Tokyo 100-8071 (JP)
(72) Inventor: YAMADA, Yoshihiro, Tokyo 100-8071 (JP)
(74) Representative: Vossius & Partner Patentanwälte Rechtsanwälte mbB
(86) International application number: PCT/JP2024/032583
(87) International publication number: WO 2025/057986

(57) **Abstract**

A laser processing device includes a gas injection unit that injects a gas from an opening toward an irradiation region of laser light on a surface of a steel sheet, the gas injection unit having a nozzle unit that includes an outer surface with a slope inclined so as to approach a center of the opening from an outer side of the opening in a direction parallel to the surface of the steel sheet on progression from a side opposite to the opening toward an opening side in an injection direction, in which a first adhesion inhibiting unit for inhibiting adhesion of laser spatter is disposed on at least a part of the outer surface of the nozzle unit.

## Description

### Technical Field

The present disclosure relates to a laser processing device and a laser processing method.

### Background Art

In the iron and steel industry, there has been known processing in which a surface of a steel sheet conveyed in a preset direction or a steel sheet in a stopped state is irradiated with laser light to perform grooving or the like at the surface of the steel sheet. For example, Japanese Patent Application Laid-Open (JP-A) No. 2020-138226 discloses a technique in which a plurality of laser processing portions each having a laser light source unit is disposed along a sheet width direction of an oriented magnetic steel sheet. In Japanese Patent Application Laid-Open (JP-A) No. 2020-138226, a processing groove extending along the sheet width direction is formed at the surface of the steel sheet by laser light irradiation.

Dust called laser spatter is generated from an irradiation region (that is, irradiation position) of the laser light on the surface of the steel sheet. In the present specification, foreign matter such as laser spatter or chips is also referred to as "spatter". In a case in which spatter adheres to the surface of the steel sheet, the performance of the steel sheet may be adversely affected. Therefore, a technique for removing spatter from the vicinity of the steel sheet has been proposed.

As a technique for removing spatter, for example, Japanese Patent Application Laid-Open (JP-A) No. 2020-138226 discloses a laser processing device including a laser irradiation facility, a dust collection mechanism unit that sucks spatter, and an air nozzle as a gas injection unit that injects air toward an irradiation region of laser light.

Patent Literature 1: Japanese Patent Application Laid-Open (JP-A) No. 2020-138226

### SUMMARY OF INVENTION

### Technical Problem

Here, the present disclosers of the disclosure have found that, in a case in which the gas injection unit that injects a gas from the nozzle unit toward the irradiation region is used, spatter is likely to adhere to an outer surface of the nozzle unit. The nozzle unit mentioned here is a part of the gas injection unit that includes an outer surface with a slope inclined so as to approach a center of an opening for injecting a gas from the outer side of the opening in a direction parallel to the surface of the steel sheet on progression from the side opposite from the opening toward the opening side in an injection direction. In particular, the disclosers have found that fine spatter generated by grooving at the surface of the steel sheet adheres to the nozzle unit of the gas injection unit due to prolonged use of the laser processing device. The depth of a groove is about from 10 µm to 50 µm. In addition, the dimension of the spatter generated by the formation of a groove is about from 10 µm to 50 µm, similarly to the depth of the groove.

In this regard, Japanese Patent Application Laid-Open (JP-A) No. 2020-138226 does not consider a technique for suppressing the adhesion of spatter to the outer surface of the nozzle unit during laser processing in a case in which the gas injection unit has the nozzle unit.

The disclosure has been made in view of the above circumstances, and provides a laser processing device and a laser processing method capable of suppressing the adhesion of laser spatter to an outer surface of a nozzle unit of a gas injection unit.

### Solution to Problem

A laser processing device according to the disclosure includes a gas injection unit that injects a gas from an opening toward an irradiation region of laser light on a surface of a steel sheet, the gas injection unit having a nozzle unit that includes an outer surface with a slope inclined so as to approach a center of the opening from an outer side of the opening in a direction parallel to the surface of the steel sheet on progression from a side opposite to the opening toward an opening side in an injection direction, in which a first adhesion inhibiting unit for inhibiting adhesion of laser spatter is disposed on at least a part of the outer surface of the nozzle unit.

A laser processing method according to the disclosure includes: irradiating a surface of a steel sheet with laser light; and using a gas injection unit having a nozzle unit that includes an outer surface with a slope inclined so as to approach a center of an opening from an outer side of the opening in a direction parallel to the surface of the steel sheet on progression from a side opposite to the opening toward an opening side in an injection direction, in which an adhesion inhibiting unit for inhibiting adhesion of laser spatter is disposed on at least a part of the outer surface of the nozzle unit, to inject a gas from the opening toward an irradiation region of the laser light so as to lift the laser spatter generated from the irradiation region from the surface of the steel sheet.

### Advantageous Effects of Invention

According to the disclosure, it is possible to suppress the adhesion of laser spatter to an outer surface of a nozzle unit of a gas injection unit.

### BRIEF DESCRIPTION OF DRAWINGS

Fig. 1 is a plan view illustrating a laser processing device according to a first embodiment of the disclosure.
Fig. 2 is a cross-sectional view taken along the line 2-2 in Fig. 1.
Fig. 3 is a cross-sectional view illustrating a laser processing device according to a first modification example of the first embodiment, taken at a position of the line 2-2 in Fig. 1.
Fig. 4 is a cross-sectional view illustrating a laser processing device according to a second modification example of the first embodiment, taken at a position of the line 2-2 in Fig. 1.
Fig. 5 is a cross-sectional view illustrating a laser processing device according to a third modification example of the first embodiment, taken at a position of the line 2-2 in Fig. 1.
Fig. 6 is a graph illustrating adhesion rates of spatter to a gas injection unit in the respective laser processing devices according to the first embodiment and first to third modification examples.
Fig. 7 is a cross-sectional view illustrating a laser processing device according to a second embodiment of the disclosure, taken at a position corresponding to the line 2-2 in Fig. 1.
Fig. 8 is a cross-sectional view illustrating a gas injection unit of a laser processing device according to a fourth modification example of the second embodiment, taken at a position corresponding to the line 2-2 in Fig. 1.
Fig. 9 is a front view illustrating a gas injection unit of the laser processing device according to the fourth modification example of the second embodiment as viewed along a conveyance direction.
Fig. 10 is a cross-sectional view illustrating a laser processing device according to a fifth modification example of the second embodiment, taken at a position corresponding to the line 2-2 in Fig. 1.
Fig. 11 is a cross-sectional view illustrating a laser processing device according to a sixth modification example of the second embodiment, taken at a position corresponding to the line 2-2 in Fig. 1.
Fig. 12 is a graph illustrating adhesion rates of spatter to a gas injection unit in the respective laser processing devices according to the second embodiment and fourth to sixth modification examples.
Fig. 13 is a cross-sectional view illustrating a laser processing device according to a third embodiment of the disclosure, taken at a position corresponding to the line 2-2 in Fig. 1.
Fig. 14 is a cross-sectional view illustrating a laser processing device according to a seventh modification example of the third embodiment, taken at a position corresponding to the line 2-2 in Fig. 1.
Fig. 15 is a cross-sectional view illustrating a laser processing device according to an eighth modification example of the third embodiment, taken at a position corresponding to the line 2-2 in Fig. 1.
Fig. 16 is a plan view illustrating a first peeling mechanism in a standby state in a dust collection mechanism unit of the laser processing device according to the eighth modification example of the third embodiment.
Fig. 17 is a cross-sectional view taken along the line 17-17 in Fig. 16.
Fig. 18 is a cross-sectional view taken along the line 18-18 in Fig. 16.
Fig. 19 is a plan view illustrating the first peeling mechanism in an extrusion state in the dust collection mechanism unit of the laser processing device according to the eighth modification example of the third embodiment.
Fig. 20 is a cross-sectional view illustrating the first peeling mechanism in an extrusion state in the dust collection mechanism unit of the laser processing device according to the eighth modification example of the third embodiment, taken at a position corresponding to the line 17-17 in Fig. 16.
Fig. 21 is a plan view illustrating a second peeling mechanism in a standby state in the dust collection mechanism unit of the laser processing device according to the eighth modification example of the third embodiment.
Fig. 22 is a cross-sectional view taken along the line 22-22 in Fig. 21.
Fig. 23 is a front view illustrating the peeling mechanism in a standby state on the bottom portion side in the dust collection mechanism unit of the laser processing device according to the eighth modification example of the third embodiment.
Fig. 24 is a plan view illustrating the second peeling mechanism in an extrusion state in the dust collection mechanism unit of the laser processing device according to the eighth modification example of the third embodiment.
Fig. 25 is a cross-sectional view illustrating the second peeling mechanism in an extrusion state in the dust collection mechanism unit of the laser processing device according to the eighth modification example of the third embodiment, taken at a position corresponding to the line 22-22 in Fig. 21.
Fig. 26 is a cross-sectional view illustrating a laser processing device according to a ninth modification example of the third embodiment, taken at a position corresponding to the line 2-2 in Fig. 1.
Fig. 27 is a graph illustrating adhesion rates of spatter to a dust collection mechanism unit in the respective laser processing devices according to the third embodiment and seventh to ninth modification examples.

### DESCRIPTION OF EMBODIMENTS

Hereinafter, a first embodiment and a second embodiment will be described. In the following description of the drawings, the same or similar portions are denoted by the same or similar reference numerals. However, the drawings are schematic views, and relationships between thicknesses and plane dimensions, thickness ratios of devices and members, and the like are different from reality. Therefore, specific thicknesses and dimensions need to be determined in consideration of the following description. There are also portions among the drawings in which the dimensional relationships and ratios differ. Also, unless otherwise specified in the specification, the number of each component in the disclosure is not limited to one, and a plurality of components may be present.

### <Laser Processing Device>

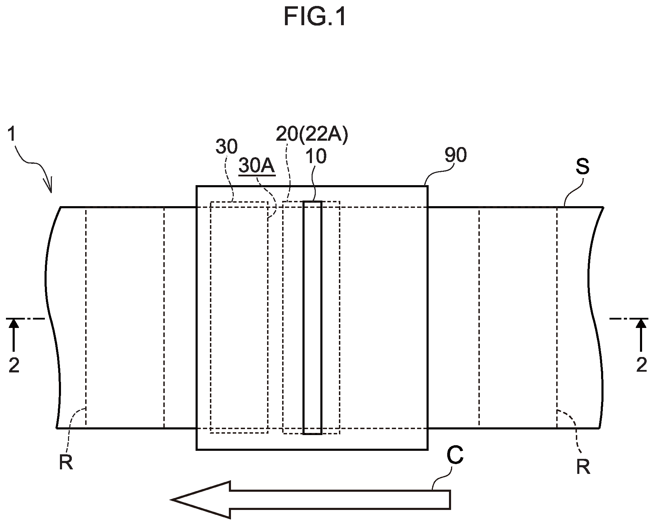

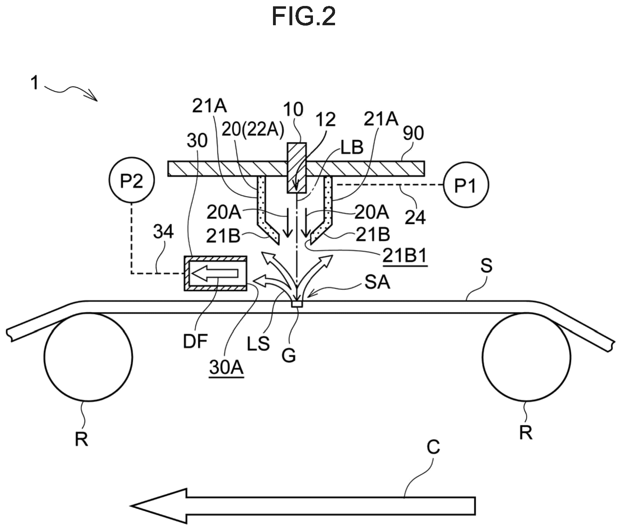

As shown in Figs. 1 and 2, a laser processing device 1 according to the first embodiment includes a laser light source unit 10, a gas injection unit 20, a dust collection mechanism unit 30, and a top board 90. Operating states of the laser light source unit 10, the gas injection unit 20, and the dust collection mechanism unit 30 are controlled by, for example, various computers (not shown) such as a processing computer that integrally controls a steel sheet manufacturing process.

### (Steel Sheet)

A target to be processed by the laser processing device 1 according to the first embodiment is a steel sheet S. The type of the steel sheet S is not particularly limited, and various known steel sheets S such as oriented magnetic steel sheets (for example, JIS C 2553: 2012) can be adopted. In addition, the type of processing using laser light is not limited. The laser processing device 1 according to the first embodiment can be applied to various types of known processing using laser light, which are performed at arbitrary timings in a manufacturing process for manufacturing various steel sheets S.

The steel sheet S is conveyed by conveyance rolls R provided at a predetermined interval along a conveyance direction C. The conveyance direction C is set in advance. The laser processing device 1 according to the first embodiment is installed between adjacent conveyance rolls R. In the disclosure, an installation position of the laser processing device is not limited to between adjacent conveyance rolls.

In addition, although not shown in the drawings, in the disclosure, the laser processing device may be installed to face a portion in which the conveyed steel sheet and the irradiation direction overlap each other on a roll surface of a steel sheet support roll that changes the conveyance direction C of the steel sheet S. For example, the steel sheet support roll can change a pass line of the steel sheet S that is being conveyed in a horizontal direction to an oblique direction. In addition, the steel sheet support roll can change a pass line of the steel sheet S that is being conveyed obliquely upward to an obliquely downward direction. In the disclosure, the laser processing device can be installed at an arbitrary position on the conveyance line on which the steel sheet S is conveyed.

### (Steel Strip Coil)

A steel strip coil is used as the steel sheet S according to the first embodiment. In the disclosure, the steel sheet is not limited to the steel strip coil, and for example, a cut sheet cut out in advance from a steel strip coil or the like may be adopted as the steel sheet. The steel strip coil can be produced by winding a long steel strip having a constant width.

In a case in which a surface of the steel sheet S is subjected to laser processing, one end positioned on the center side of the wound steel strip coil is rotatably supported on one end side in the longitudinal direction of the processing facility, and the other end positioned outer side the steel strip coil is connected to the other end side in the longitudinal direction of the processing facility. Then, the other end of the steel strip coil is drawn and wound at a substantially constant speed toward the other end side of the processing facility. In the first embodiment, performing laser processing on the surface of the steel sheet S of the steel strip coil as the steel strip coil being wound passes through the laser processing device 1 installed in the processing facility is also referred to as "threading".

### (Continuous Processing)

In the first embodiment, the laser processing performed during threading of the steel sheet S of the steel strip coil is also referred to as "continuous processing". Meanwhile, performing laser processing on the surface of the cut sheet without drawing the steel strip coil is referred to as "batch processing". In laser processing of the batch processing, in a state in which, as a steel sheet, for example, a rectangular cut sheet is fixed on a support stand for processing or supported on a conveyance line, laser processing is performed on each individual cut sheet while the laser processing device moves along a length direction of the cut sheet as necessary. In addition, fixing to the support stand, or loading or unloading onto/from the conveyance line is also performed for each cut sheet. Therefore, in the batch processing, the cost of grooving processing tends to be high, and as a result, productivity is relatively lowered.

In laser processing of the continuous processing as in the first embodiment, by simply performing the processing in the sheet width direction, such as scanning of laser light LB, continuously and repeatedly, it is possible to perform grooving substantially uniformly over substantially the whole length of the steel strip coil in a relatively short period of time after winding the steel strip coil. In addition, an operation of moving the laser processing device 1 over the whole length of the steel strip coil, that is, an operation of moving the laser processing device 1 along the conveyance direction C is also not required. Therefore, the cost of grooving processing can be reduced in the continuous processing, compared to the batch processing, and as a result, the productivity can be improved.

### (Laser light source unit)

The laser light source unit 10 emits laser light LB having a predetermined wavelength to the surface of the conveyed steel sheet S. The laser light source unit 10 includes a laser light source (not shown) for emitting the laser light LB having a wavelength and an intensity necessary for realizing target processing, and an optical system (not shown) for guiding the laser light LB emitted from the laser light source to the surface of the steel sheet S.

The laser light source is not particularly limited, and various laser light sources such as various solid-state laser light sources, gas laser light sources, and semiconductor laser light sources can be used. The optical system is also not particularly limited, and various optical systems for guiding the laser light LB to the surface of the steel sheet S can be used.

An installation position of the laser light source unit 10 is not particularly limited, and for example, as schematically shown in Fig. 2, the laser light source unit 10 is preferably provided above the steel sheet S in the vertical direction so that an irradiation optical axis of the laser light LB is substantially perpendicular to the surface of the steel sheet S.

### (Gas Injection unit)

As shown in Figs. 1 and 2, the gas injection unit 20 is disposed at both a position on the upstream side in the conveyance direction C and a position on the downstream side in the conveyance direction C in an emission portion 12 for the laser light LB of the laser light source unit 10. As shown in Fig. 2, the gas injection unit 20 is connected to an air supply pump P1 via an air supply duct 24.

In the first embodiment, the gas injection unit 20 is an air nozzle that injects a gas 20A from an opening 21B1 toward an irradiation region SA of the laser light LB in parallel with an optical axis direction of the laser light LB. The opening 21B1 of the gas injection unit 20 of the first embodiment has a rectangular shape having a long side extending along the width direction (up-down direction in Fig. 1) in plan view. In the disclosure, the shape of the opening of the gas injection unit is not limited to a rectangular shape, and may be another geometric shape. The gas injection unit 20 injects dry air supplied from an air supply pipe (not shown) as an example of the gas 20A to the irradiation region SA of the laser light LB on the surface of the steel sheet S.

The gas injection unit 20 includes a base portion 21A and a nozzle unit 21B. The base portion 21A in Fig. 2 includes a pair of outer surfaces facing each other in the longitudinal direction of the steel sheet S. The pair of outer surfaces extends along the width direction (up-down direction in Fig. 1) and is closed on both end sides thereof. The pair of outer surfaces of the base portion 21A in Fig. 2 is vertical. An upper portion of the base portion 21A in Fig. 2 is attached to the top board 90, and a lower portion of the base portion 21A is continuous with the nozzle unit 21B. The shape of the base portion 21A is not limited to that in Fig. 2, and may be any shape as long as a gas can be guided to the nozzle unit 21B.

As shown in Fig. 2, the nozzle unit 21B is connected to the base portion 21A on the side opposite to the top board 90. The nozzle unit 21B includes an outer surface with a slope inclined so as to approach a center of the opening 21B1 from the outer side of the opening 21B1 in a direction parallel to the surface of the steel sheet S on progression from the side (upper side in Fig. 2) opposite from the opening 21B1 toward the opening 21B1 side (lower side in Fig. 2) in an injection direction (up-down direction in Fig. 2). The center of the opening 21B1 is a position of the center of the opening 21B1 in the longitudinal direction (left-right direction in Fig. 2) of the steel sheet S. The center of the opening 21B1 in Fig. 2 overlaps with the laser light LB indicated by the dash-dot line.

In other words, the length of the pair of outer surfaces facing each other in the longitudinal direction of the steel sheet S of the nozzle unit 21B, measured along the longitudinal direction of the steel sheets S, decreases from the emission portion 12 side toward the irradiation region SA side. An opening surface of the nozzle unit 21B is orthogonal to the injection direction. The outer surface with the slope of the nozzle unit 21B is inclined with respect to the conveyance direction C. The outer surface of the nozzle unit 21B includes a target surface whose normal line faces the direction in which the steel sheet S exists.

In a case in which the steel sheet S is conveyed during laser processing as in the first embodiment, the longitudinal direction of the steel sheet S is parallel to the conveyance direction C (that is, left-right direction in Fig. 1). The conveyance direction C is orthogonal to the width direction (that is, up-down direction in Fig. 1) of the steel sheet S. In a case in which the steel sheet S is stopped during laser processing, the longitudinal direction of the steel sheet S is a length direction parallel to the surface of the steel sheet S and orthogonal to the width direction of the steel sheet S.

The gas injection unit 20 is disposed so that dry air, which is the gas 20A to be jetted, overlaps with the laser light LB over the whole scanning width of the laser light LB in the sheet width direction (that is, up-down direction in Fig. 1) of the steel sheet S when viewed along the conveyance direction C. That is, the gas injection unit 20 is disposed so that the dry air to be jetted is directed to at least a part of the laser light LB. The discharge and injection of the gas 20A jetted from the gas injection unit 20 suppress the adhesion of spatter LS to the emission portion 12. The surface portion of the steel sheet S heats up and expands in volume due to the energy of the laser light LB, so that the portion expanded in volume is ejected from the surface of the steel sheet S as the spatter LS. The ejected spatter LS is collected by the dust collection mechanism unit 30 along with a flow of a suction airstream DF generated by the dust collection mechanism unit 30.

In the laser processing device 1 according to the first embodiment, instead of using an air knife having such a flow rate to remove spatter from the inside of a groove G at the surface of the steel sheet, the gas injection unit 20 that injects dry air having a smaller flow rate than the air knife is used. Therefore, the spatter LS can be wound up from the surface of the steel sheet S and superimposed on the flow of air generated by the dust collection mechanism unit 30 without disrupting the flow of air for dust collection like the air knife.

In other words, in the laser processing device 1 according to the first embodiment, dry air is jetted from the gas injection unit 20 toward the irradiation region SA of the laser light LB to such an extent that the spatter LS can be wound up from the surface of the steel sheet S. Therefore, in the disclosure, the entire dry air may not reach the irradiation region SA. Alternatively, only a part of the dry air may reach the irradiation region SA. As a result, the spatter LS wound up can be prevented from adhering to the laser processing device, in particular, the emission portion 12 and the gas injection unit 20. In order to lift the spatter LS from the surface of the steel sheet S, for example, injection conditions including an injection speed and the like may be determined based on experiments or the like, and a gas such as dry air may be jetted under the determined injection conditions.

Meanwhile, unlike the air nozzle as in the first embodiment, dry air jetted by the air knife reaches the groove G and blows off the spatter inside the groove G. Therefore, the spatter LS blown off adheres to the laser processing device including the emission portion 12. In greater detail, in a case in which an air knife is used, molten particles called chips, having a diameter of 100 µm or more, may be generated. Since the chips are hardly cooled and hardly superimposed on the flow of air generated by the dust collection mechanism unit 30, the chips easily adhere to the peripheral device. On the other hand, in a case in which the air nozzle is used as in the first embodiment, it is possible to suppress the generation of molten particles having a diameter of 100 µm or more, and as a result, it is possible to control particles to be generated so that the particles are relatively easily cooled, easily superimposed on the flow of air generated by the dust collection mechanism unit 30, and within a range of from 10 to 50 µm.

The installation position of the gas injection unit 20 is not particularly determined as long as it is a position where dry air can be jetted onto the surface of the steel sheet S. However, as shown in Figs. 1 and 2, the gas injection unit 20 is preferably provided immediately above the steel sheet S. In addition, the gas injection unit 20 is more preferably provided in parallel with the optical axis direction of the laser light LB so that the direction of the nozzle main axis of the gas injection unit 20, in other words, the traveling direction of the jetted dry air is substantially coaxial with the optical axis direction of the laser light LB in the laser light source unit 10. The dry air illustrated in Fig. 2 is jetted toward the surface of the steel sheet S to be parallel to the optical axis direction of the laser light LB and be substantially orthogonal to the surface of the steel sheet S.

Here, in the first embodiment, the injecting amount of the dry air jetted from the gas injection unit 20 is preferably set to be equal to or less than the suction amount of the dust collection mechanism unit 30. In a case in which the injecting amount of the dry air from the gas injection unit 20 is equal to or less than the suction amount of the dust collection mechanism unit 30, it is possible to more reliably suppress the dry air from disrupting the flow of air for suction of the spatter LS, and the chips from being generated, while lifting up the spatter LS from the surface of the steel sheet S. Therefore, the collection efficiency of the spatter LS can be more reliably improved. More preferably, the injecting amount of the dry air jetted from the gas injection unit 20 is more finely controlled. In the disclosure, the injecting amount of the dry air is not limited to be equal to or less than the suction amount of the dust collection mechanism unit 30, and can be arbitrarily changed.

In addition, the discharge flow rate of the dry air jetted from the gas injection unit 20 is preferably set to a value equal to or less than the suction flow rate by the dust collection mechanism unit 30. In a case in which the discharge flow rate of the dry air is equal to or less than the suction flow rate by the dust collection mechanism unit 30, the collection efficiency by the dust collection mechanism unit 30 can be further improved. In the disclosure, the discharge flow rate of the dry air is not limited to be equal to or less than the suction flow rate of the dust collection mechanism unit 30, and can be arbitrarily changed.

In addition, specific examples of the gas injection unit 20 realizing the injection of the dry air are not particularly limited, and various known air injection nozzles can be used. Examples of the air injection nozzles include a slit nozzle. In addition, the gas 20A jetted from the gas injection unit 20 is not limited to the above-described dry air, and may be, for example, nitrogen, argon, carbon dioxide, helium, or the like.

### (Adhesion Inhibiting unit)

On the surface of the gas injection unit 20 of the first embodiment, an adhesion inhibiting unit 22A including a simple substance of carbon and provided to inhibit the adhesion of spatter LS is disposed. In each of the first embodiment and a modification example of the first embodiment, the adhesion inhibiting unit provided in the gas injection units 20 corresponds to a first adhesion inhibiting unit of the disclosure. Specifically, in the first embodiment, the entire gas injection unit 20 including the base portion 21A and the nozzle unit 21B is formed of a simple substance of carbon as the adhesion inhibiting unit 22A. The "entire gas injection unit 20" means, in other words, a main body of the air nozzle as the gas injection unit 20.

In addition, the connection port portion between the gas injection unit 20 and the air supply pump P1, such as a pipe, may also be included in the "entire gas injection unit 20" by being formed of a simple substance of carbon. In the disclosure, it is not essential that the entire gas injection unit 20 is formed of a simple substance of carbon, and for example, a part of the gas injection unit 20 on the steel sheet side may be formed of a simple substance of carbon.

In the gas injection unit 20 that is a simple substance of carbon, for example, surface flatness is increased compared to a gas injection unit that is formed of a metal such as steel, a resin, or the like and includes no simple substance of carbon. Therefore, surface unevenness is significantly suppressed. Similarly, the gas injection unit 20 that is a simple substance of carbon has more excellent heat resistance than a gas injection unit that is formed of a metal such as steel, a resin, or the like and includes no simple substance of carbon. In the first embodiment, due to the improved flatness and heat resistance, spatter LS at a relatively high temperature is less likely to adhere.

The simple substance of carbon of the disclosure can be defined as a structure formed by bonding a plurality of carbon atoms to each other. In the first embodiment, the simple substance of carbon is, for example, isotropic graphite that can be produced by cold isostatic pressing (CIP) forming, but is not limited thereto in the disclosure, and may be another graphite material, for example. For example, the simple substance of carbon may be anisotropic graphite, carbon fiber, carbon sheet, or the like.

In the first embodiment, the bulk density of the simple substance of carbon is preferably about 1.7 g/cm³ or more. In a case in which the bulk density is less than 1.7 g/cm³, there is a concern that the durability of the simple substance of carbon in the laser processing device may decrease.

In the disclosure, for example, in a case in which the simple substance of carbon is anisotropic graphite, the bulk density of the simple substance of carbon is preferably about 1.5 g/cm³ or more. However, as in the first embodiment, isotropic graphite is preferably used as the simple substance of carbon from the viewpoint that the durability of the simple substance of carbon can be improved compared to cases in which other materials are used.

### (Dust Collection Mechanism unit)

The dust collection mechanism unit 30 is a mechanism that collects spatter LS floating near the irradiation region SA of the laser light LB while suppressing the adhesion of the spatter LS to the emission portion 12 by dry air injected from the gas injection unit 20. The dust collection mechanism unit 30 has, for example, an external configuration including a cylindrical dust collection hood or the like having a dust collection port 30A for collecting spatter LS on one side in the axial direction. The dust collection mechanism unit 30 has a dust collection flow path (not shown) for sucking spatter LS, a dust collection duct 34 connected to the dust collection flow path, and a suction pump P2 connected to the dust collection duct 34.

The dust collection mechanism unit 30 is configured to suck the atmosphere around the dust collection port 30A in a predetermined suction amount. The dust collection mechanism unit 30 carries out a suction operation to collect the spatter LS generated from the irradiation region SA of the laser light LB from the dust collection port 30A. The specific configuration of the dust collection mechanism unit 30 is not particularly limited, and various known mechanisms can be appropriately used. In addition, the number of dust collection mechanism units 30 is not limited to one, and may be more than one.

As schematically shown in Figs. 1 and 2, the dust collection mechanism unit 30 is provided only on either one of the upstream side of the irradiation region SA of the laser light LB or the downstream side of the irradiation region SA of the laser light LB in the conveyance direction C of the steel sheet S. That is, the dust collection mechanism unit 30 is not provided on both the upstream side and the downstream side of the irradiation region SA of the laser light LB. By providing the dust collection mechanism unit 30 only on the upstream side or the downstream side of the irradiation region SA of the laser light LB, it is possible to prevent the flow of air for sucking the spatter LS from being stagnant near the irradiation region SA of the laser light LB, and to reliably collect the spatter LS.

In addition, in a case in which the dust collection mechanism unit 30 is disposed on one of the upstream side or the downstream side, the dust collection mechanism unit 30 and a member included in the laser processing device 1 may interfere with each other, and thus it may be difficult to ensure the space for positioning the dust collection mechanism unit 30. Here, in the first embodiment, the dust collection mechanism unit 30 can be disposed on any one of the upstream side or the downstream side, and thus, for example, even in a case in which it is difficult to ensure the space where the dust collection mechanism unit 30 is disposed on one side, the space for positioning can be set on the other side. That is, it is easy to flexibly change the position where the dust collection mechanism unit 30 is disposed. In the present disclosure, the dust collection mechanism unit may be provided on both the upstream side and the downstream side of the irradiation region SA of the laser light LB in the conveyance direction C of the steel sheet S.

In addition, as schematically shown in Fig. 2, the dust collection mechanism unit 30 is more preferably provided only on the downstream side of the irradiation region SA of the laser light LB. In a case in which the steel sheet S to be processed is conveyed along the conveyance direction C, a flow of air (that is, accompanying flow) from the upstream side to the downstream side in the conveyance direction C is generated. Therefore, by providing the dust collection mechanism unit 30 only on the downstream side of the irradiation region SA of the laser light LB, it is possible to utilize the accompanying flow, and as a result, it is possible to more reliably collect the spatter LS.

The suction amount by the dust collection mechanism unit 30 is preferably equal to or more than the injecting amount of the dry air from the gas injection unit 20. Therefore, it is possible to more reliably prevent the flow of air around the irradiation region SA of the laser light LB from being stagnant, and it is possible to more reliably collect the spatter LS. In the disclosure, the suction amount by the dust collection mechanism unit 30 is not limited to be equal to or more than the injecting amount of the gas 20A from the gas injection unit 20, and can be arbitrarily changed.

In addition, the suction flow rate by the dust collection mechanism unit 30 is, for example, preferably 15 m/s or more and 50 m/s or less, and more preferably 20 m/s or more and 30 m/s or less. In a case in which the suction flow rate is 15 m/s or more and 50 m/s or less, the flow of air around the irradiation region SA of the laser light LB is not disrupted. As a result, it is possible to more reliably collect the spatter LS.

In a case in which the suction flow rate is less than 15 m/s, the spatter suction rate decreases. In addition, in a case in which the suction flow rate is more than 50 m/s, power consumption increases. In addition, in a case in which the suction flow rate is more than 50 m/s, the negative pressure increases due to suction, and thus pressure vibrations occur, which may cause problems in stability of threading and in stability of the laser device. In the disclosure, the suction flow rate by the dust collection mechanism unit 30 is not limited to 15 m/s or more and 50 m/s or less, and can be arbitrarily changed.

### (Laser Processing Portion and Laser Processing Set)

In the disclosure, one "laser processing portion" may include one laser light source unit 10, one gas injection unit 20, and one dust collection mechanism unit 30 corresponding to each other. In addition, one "laser processing set" may include a plurality of laser processing portions arranged along the sheet width direction of the steel sheet S.

In the disclosure, the number of laser processing portions included in one laser processing set may be one or more. In the disclosure, two or more laser processing sets may be disposed in plural stages along the conveyance direction C with respect to one steel sheet S.

### (Top board)

The laser light source unit 10 and the gas injection unit 20 are attached to the top board 90. In the disclosure, the "laser processing portion" may be configured to include the top board. As shown in Fig. 2, the top board 90 separates a space on the steel sheet S side and a space on the side opposite to the steel sheet S at a position of the height of the emission portion 12 of the laser light source unit 10. That is, the top board 90 serves as a partition wall that prevents the spatter LS from adhering to a side above the emission portion 12 of the laser light source unit 10.

With the laser processing device 1 according to the first embodiment, it is possible to more efficiently collect the spatter LS generated with the irradiation of the laser light LB, and thus, for example, it is possible to more easily realize a collection efficiency of 90% or more. The collection efficiency of the spatter LS can be calculated as (number of particles of spatter LS reaching deepest part of dust collection flow path provided in dust collection mechanism unit 30)/(number of particles of generated spatter LS).

In addition, as a result of further improvement of the collection efficiency of the spatter LS, the spatter LS reaching the wall surface of the laser light source unit 10 can also be reduced, and the cleanliness of the laser light source unit 10 and the convenience of maintenance can be further improved. Therefore, in a case in which the laser processing device 1 according to the first embodiment is applied to, for example, domain control processing of an oriented magnetic steel sheet, the generated spatter LS can be more reliably collected even in a case in which it is required to further increase the power of the incident laser light LB.

### (Laser Processing Method)

A laser processing method according to the first embodiment can be realized by using the laser processing device 1 according to the first embodiment. The laser processing method according to the first embodiment is a method for collecting spatter LS generated from the irradiation region SA of the laser light LB due to the laser light LB applied to the surface of the steel sheet S.

In the laser processing method according to the first embodiment, as continuous processing, the surface of the steel sheet S (that is, steel sheet S during moving) that is being conveyed in the conveyance direction C set in advance is irradiated with laser light LB from the laser light source unit 10. In addition, toward the irradiation region SA of the laser light LB, dry air is jetted from the opening 21B1 of the nozzle unit 21B of the gas injection unit 20 in parallel with the optical axis direction of the laser light LB. By injecting the dry air, the spatter LS generated from the irradiation region SA can be wound up, that is, raised from the surface of the steel sheet S.

In the first embodiment, even in a case in which the spatter LS is wound up, the gas injection unit 20 as the adhesion inhibiting unit 22A including a simple substance of carbon inhibits the adhesion of the spatter LS to the surface of the gas injection unit 20. Then, the spatter LS is collected from the dust collection port 30A of the dust collection mechanism unit 30 provided only on either one of the upstream side or the downstream side of the irradiation region SA of the laser light LB in the conveyance direction C of the steel sheet S.

### (Actions and Effects of First Embodiment)

In the first embodiment, on the outer surface of the nozzle unit 21B of the gas injection unit 20, the adhesion inhibiting unit 22A including a simple substance of carbon and provided to inhibit the adhesion of spatter LS is disposed. Here, as in Example 1 to be described later, the disclosers have found that, in a case in which the adhesion inhibiting unit 22A including a simple substance of carbon is disposed on the outer surface of the nozzle unit 21B of the gas injection unit 20, the effect of suppressing the adhesion of the spatter LS generated from the irradiation region SA to the outer surface of the nozzle unit 21B is greater than in a case in which the adhesion inhibiting unit 22A is not disposed. The spatter LS whose adhesion to the outer surface of the nozzle unit 21B is inhibited by the adhesion inhibiting unit 22A is collected by the dust collection mechanism unit 30. According to the first embodiment, it is possible to suppress the adhesion of the spatter LS to the outer surface of the nozzle unit 21B of the gas injection unit 20 that injects the gas 20A from the opening 21B1 toward the irradiation region SA of the laser light LB.

In addition, in the first embodiment, the adhesion inhibiting unit 22A is formed such that the entire gas injection unit 20 is made of a simple substance of carbon. As a result, the adhesion inhibiting unit 22A is disposed on the entire outer surface of the nozzle unit 21B. Therefore, it is not necessary to prepare a component different from the gas injection unit 20 as the adhesion inhibiting unit 22A.

Here, the disclosers have found that, in a case in which the injection direction of the gas of the gas injection unit is parallel to the optical axis direction of the laser light, spatter is likely to adhere to the outer surface of the nozzle unit. In the first embodiment, even in a case in which the injection direction of the gas 20A of the gas injection unit 20 is parallel to the optical axis direction of the laser light LB, the adhesion inhibiting unit 22A can suppress the adhesion of the spatter LS to the nozzle unit 21B of the gas injection unit 20. In the disclosure, the injection direction of the gas of the gas injection unit is not limited to being parallel to the optical axis direction of the laser light, and can also intersect the optical axis direction.

In addition, in the first embodiment, the laser processing device 1 includes the conveyance roll R that conveys the steel sheet S in the conveyance direction C set in advance, and the laser light source unit 10 that irradiates the surface of the steel sheet S conveyed in the conveyance direction C with the laser light LB. Thus, the steel sheet S during conveyance can be subjected to laser processing.

In particular, in a case in which the dust collection mechanism unit is disposed in the laser processing device having the nozzle unit, the nozzle unit certainly functions as a guide of the gas flow depending on the positional relationship between the nozzle unit and the dust collection mechanism unit. Therefore, it has been found that the spatter adheres to the nozzle unit due to prolonged use of the laser processing device, and the flow of the gas such as air stagnates due to the adhesion, resulting in a decrease in collection efficiency. However, as in the disclosure, in a case in which the spatter adhesion inhibiting unit is disposed in the nozzle unit, the laser processing device can be operated for a longer period of time, and as a result, it is possible to reduce the load of maintenance and improve the availability (in other words, continuous operation capability).

### (First Modification Example)

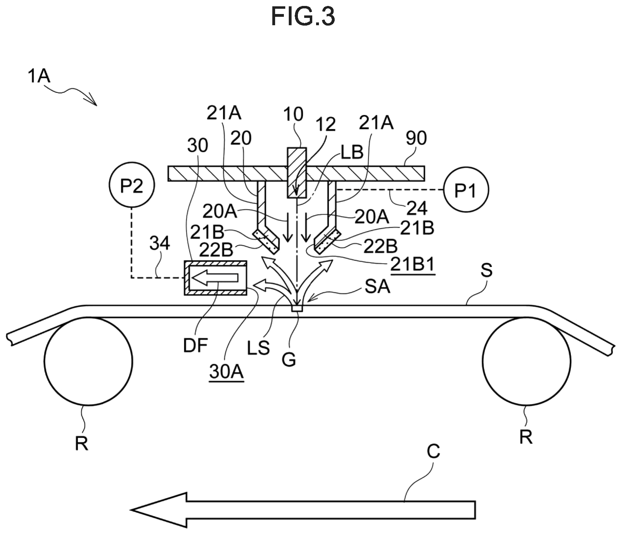

As shown in Fig. 3, a first modification example is different from the first embodiment in that a carbon plate 22B formed of a simple substance of carbon as an adhesion inhibiting unit is disposed in a gas injection unit 20 in a state of being a separate component from the gas injection unit 20.

Specifically, the gas injection unit 20 of a laser processing device 1A according to the first modification example is made of, for example, a metal such as steel or a resin, unlike the gas injection unit 20 formed of a simple substance of carbon of the first embodiment. In addition, the adhesion inhibiting unit is a plate-like member disposed on a part of the surface of the gas injection unit 20. In the disclosure, the carbon plate is not limited to being one plate-like member. For example, the carbon plate may be an adhesion inhibiting unit including one carbon sheet, a layered body of two or more carbon sheets, or the like, and can be used as the carbon plate of the disclosure.

The carbon plate 22B is disposed on an outer surface of a nozzle unit 21B on the tip (lower end in Fig. 3) side of the irradiation region SA side in the gas injection unit 20. In the disclosure, the position where the carbon plate 22B is disposed is not limited thereto, and may be between the irradiation region SA of laser light LB and the gas injection unit 20. The carbon plate 22B is preferably disposed in close contact with a lower end of the gas injection unit 20 in Fig. 3 from the viewpoint of suppressing fine vibrations during processing. Since other configurations in the first modification example are the same as those of the first embodiment, redundant description thereof will be omitted.

### (Actions and Effects of First Modification Example)

In the first modification example, as in the first embodiment, it is possible to suppress the adhesion of spatter LS to the outer surface of the nozzle unit 21B of the gas injection unit 20 that injects a gas from an opening 21B1 toward the irradiation region SA of the laser light LB. In addition, in the first modification example, the adhesion inhibiting unit is a plate-like member disposed on a part of the surface of the gas injection unit 20. That is, the carbon plate 22B formed of a simple substance of carbon as an adhesion inhibiting unit is disposed on the entire outer surface of the nozzle unit 21B of the gas injection unit 20 in a state of being a separate component from the gas injection unit 20. In the disclosure, the adhesion inhibiting unit formed of a simple substance of carbon may be disposed on at least a part of the outer surface of the nozzle unit of the gas injection unit in a state of being a separate component from the gas injection unit.

Therefore, the adhesion inhibiting unit is easily attached separately to the existing gas injection unit 20 in which no adhesion inhibiting unit is provided. In addition, since the adhesion inhibiting unit is a separate component from the gas injection unit 20, the adhesion inhibiting unit is less likely to be broken even in a case in which vibrations or the like of the laser processing device are applied thereto. Other actions and effects of the first modification example are the same as those of the first embodiment.

### (Second Modification Example)

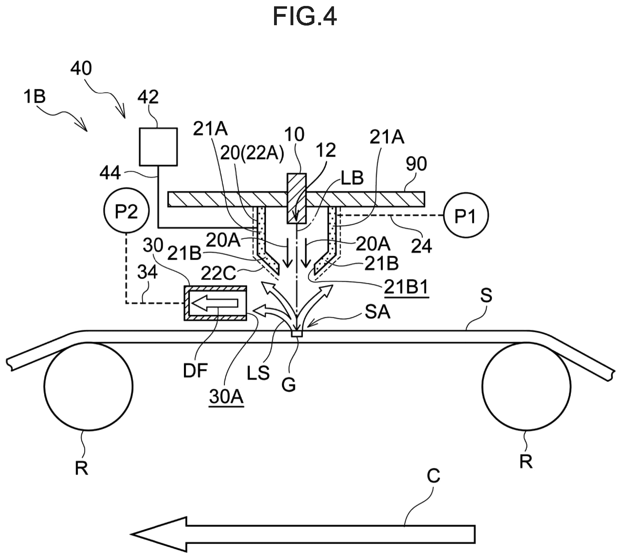

As shown in Fig. 4, a second modification example is different from the first embodiment in that a gas injection unit 20 is an adhesion inhibiting unit 22A that is a simple substance of carbon, and a charge applying device 40 that applies a charge 22C having the same polarity as the charge of spatter LS to the gas injection unit 20 as an adhesion inhibiting unit is provided. That is, in the second modification example, the adhesion of the spatter LS to the gas injection unit 20 is further inhibited by an electric repulsive force. In the disclosure, it is not essential that an adhesion inhibiting unit that is a simple substance of carbon is used in combination with an adhesion inhibiting unit having the same polarity of charge as the spatter LS. A charge-adhesion inhibiting unit may be used alone.

Specifically, a laser processing device 1B according to the second modification example is provided with a charge applying device 40 having a power source 42 and an electric wire 44 with one end connected to the power source 42. The other end of the electric wire 44 is connected to the gas injection unit 20. Here, the charge of spatter LS is generally about from -1 kV to -50 kV. In the first embodiment, for example, the charge of spatter LS can be set to about -10 kV.

Then, a charge 22C of approximately -10 kV is applied to the gas injection unit 20 using the charge applying device 40, thereby generating an electric repulsive force against the spatter LS on a surface of the gas injection unit 20. The gas injection unit 20 is preferably electrically insulated from members around the gas injection unit 20 to prevent a short circuit. Since other configurations in the second modification example are the same as those of the first embodiment, redundant description thereof will be omitted.

### (Actions and Effects of Second Modification Example)

In the second modification example, as in the first embodiment, it is possible to suppress the adhesion of spatter LS to the gas injection unit 20 that injects a gas toward an irradiation region SA of laser light LB in parallel with the optical axis direction of the laser light LB. In addition, in the second modification example, the laser processing device includes the charge applying device 40 that applies a charge 22C having the same polarity as the charge of the spatter LS to the gas injection unit 20 as an adhesion inhibiting unit. That is, the adhesion inhibiting unit includes the charge applying device 40. Since the adhesion of the spatter LS to the gas injection unit 20 is further inhibited by an electric repulsive force, the effect of suppressing the adhesion of the spatter LS can be further improved. Other actions and effects of the second modification example are the same as those of the first embodiment.

### (Third Modification Example)

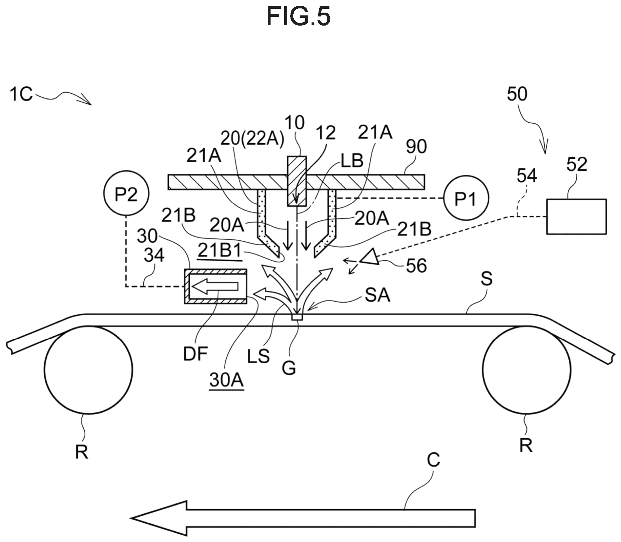

As shown in Fig. 5, a third modification example is different from the first embodiment in that a gas injection unit 20 is a simple substance of carbon, and a coating agent supply device that supplies a coating agent for coating spatter LS is provided. That is, the third modification example is different from the first embodiment in that the adhesion of spatter LS to the gas injection unit 20 is further inhibited by supplying a coating agent for coating the spatter LS to the spatter LS.

Specifically, a laser processing device 1C according to the third modification example is provided with a coating agent supply device 50 having a coating agent source 52, a supply pipe 54 with one end connected to the coating agent source 52, and a supply nozzle 56 connected to the other end of the supply pipe 54.

### (Coating Agent)

The coating agent of the first embodiment is in the form of sand or powder. Specifically, for example, a commercially available pre-coating agent for preventing sparks in polishing work or the like can be employed as the coating agent. As the powdery pre-coating agent, for example, calcium carbonate or slaked lime (that is, calcium hydroxide) can be adopted. In the disclosure, as long as the coating agent can coat the spatter LS, the form of the coating agent is not limited to the sand form or the powder form, and any form and any chemical composition can be adopted.

The coating agent is supplied toward the spatter LS rising by the formation of a groove G. Specifically, the coating agent may be supplied toward an irradiation region SA where the spatter LS occurs and the periphery thereof, and may be mainly directed from the groove G to the downstream side in a conveyance direction C. Since the spatter LS is coated with the coating agent, it is difficult for the spatter LS to adhere to the gas injection unit 20.

In the first embodiment, the supply flow rate of the coating agent is preferably set according to the amount of the spatter LS generated. Specifically, the supply flow rate of the coating agent may be set to be the same as the amount of spatter LS generated per unit time, or within a certain range relative to the amount of spatter LS generated per unit time. For example, the supply flow rate of the coating agent can be set to 60% or more and 150% or less of the amount of spatter LS generated per unit time.

In a case in which the supply flow rate of the coating agent is less than 60% of the amount of spatter LS generated per unit time, the amount of the coating agent that can coat the spatter LS is excessively reduced, so that the effect of suppressing the adhesion of the spatter LS to the gas injection unit 20 is reduced. In a case in which the supply flow rate of the coating agent is more than 150% of the amount of spatter LS generated per unit time, the amount of the coating agent becomes too large, so that the cost for the coating agent increases and the burden of handling increases.

In addition, the supply flow rate of the coating agent is preferably equal to or less than the suction flow rate of the a dust collection mechanism unit 30 by a suction pump P2 from the viewpoint that no interference occurs in the flow of a suction airstream. In the disclosure, it is not inhibited that the supply flow rate of the coating agent exceeds the suction flow rate of the dust collection mechanism unit. Since other configurations in the third modification example are the same as those of the first embodiment, redundant description thereof will be omitted.

### (Actions and Effects of Third Modification Example)

In the third modification example, as in the first embodiment, it is possible to suppress the adhesion of spatter LS to the gas injection unit 20 that injects a gas toward an irradiation region SA of laser light LB in parallel with the optical axis direction of the laser light LB. In addition, in the third modification example, the laser processing device 1C includes the coating agent supply device that supplies a coating agent for coating spatter LS. That is, as the spatter LS is coated with the coating agent, the adhesion of the spatter LS to the gas injection unit 20 can be reduced. Therefore, the effect of suppressing the adhesion of the spatter LS can be further improved. Other actions and effects of the third modification example are the same as those of the first embodiment. In addition, by combining the configuration of the laser processing device 1C according to the third modification example with the laser processing device according to any one of the first embodiment, the first modification example, or the second modification example described above, a higher spatter adhesion suppressing effect can be obtained.

### Examples

### (Example 1)

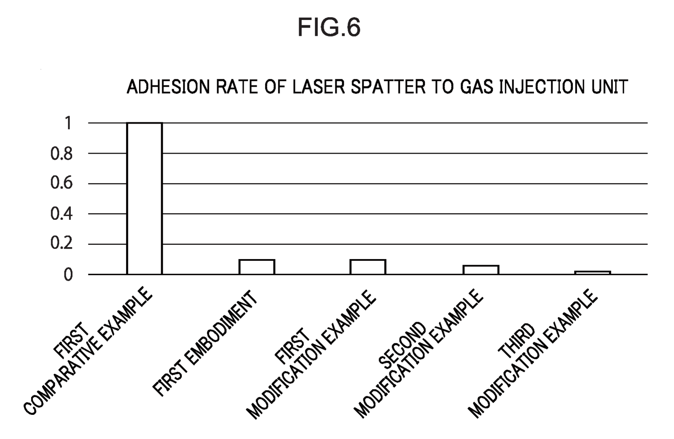

Next, Example 1 in which an adhesion rate of spatter LS is measured using each of the laser processing devices according to the first embodiment and first to third modification examples illustrated in Figs. 1 to 5 will be described with reference to Fig. 6.

The adhesion rate of spatter LS in Fig. 6 is a ratio of the number of particles of the spatter LS reaching the outer surface of the nozzle unit 21B of the gas injection unit 20 calculated in each of the first embodiment and first to third modification examples, in a case in which the number of particles of the spatter LS reaching the outer surface of the nozzle unit 21B of the gas injection unit 20 in a first comparative example is set to 1.

A gas injection unit of a laser processing device according to the first comparative example had no adhesion inhibiting unit including a simple substance of carbon and provided to inhibit the adhesion of spatter. In addition, the laser processing devices according to the first comparative example, first embodiment, and first to third modification examples had the same shape and dimensions. In Example 1, a carbon plate 22B attached to the gas injection unit 20 of the first modification example had a thickness of about 1 mm.

In Example 1, analysis was performed through computer simulation using Fluent, which is commercially available numerical calculation software. First, analysis models corresponding to the laser processing devices according to the first comparative example, first embodiment, and first to third modification examples were set. Then, analysis corresponding to laser processing, in which a steel sheet was continuously irradiated with laser light LB for about 100 hours, was performed using each of the set analysis models. In the respective analysis models, the number of particles of spatter LS generated from an irradiation region SA was the same. Then, the number of particles of the spatter LS reaching the outer surface of the nozzle unit of each gas injection unit from the irradiation region SA was calculated.

As shown in Fig. 6, in the first embodiment, the amount of adhesion of spatter was reduced to about 1/10 of that in the first comparative example. In addition, in the first modification example, it was possible to reduce the amount of adhesion of spatter to the same extent as in the first embodiment. In addition, in the second modification example, the amount of adhesion of the spatter LS was reduced to about 1/20 of that in the first comparative example. In addition, in the third modification example, the amount of adhesion of spatter was reduced to about 1/40 of that in the first comparative example. It was found from Example 1 that, in a case in which an adhesion inhibiting unit made of a simple substance of carbon is provided, the amount of adhesion of the spatter LS can be significantly reduced compared to a case in which the adhesion inhibiting unit made of a simple substance of carbon is not provided.

In addition, in Example 1, verification was further performed through a laboratory test. Specifically, experimental models corresponding to the laser processing devices according to the first comparative example, first embodiment, and first to third modification examples were set. Then, laser processing, in which a steel sheet was continuously irradiated with laser light LB for about 100 hours, was performed using each of the set experimental models. In each experimental model, the amount of adhesion was calculated by measuring an increase in weight of each part. In the verification through the laboratory test, the same results as those obtained by the analysis through computer simulation were obtained.

Next, a second embodiment and a third embodiment will be described. The configurations in the second embodiment and the third embodiment, which are the same as those in the first embodiment, will not be described repeatedly. In each of the second embodiment and a modification example of the second embodiment, the adhesion inhibiting unit provided in the gas injection units 20 corresponds to a first adhesion inhibiting unit of the disclosure.

### <Second Embodiment>

### (Adhesion Inhibiting unit)

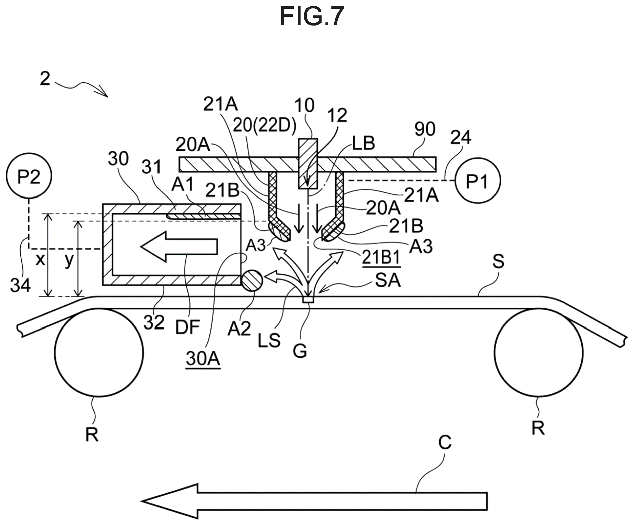

As shown in Fig. 7, on an outer surface of a gas injection unit 20 of a laser processing device 2 according to the second embodiment, an adhesion inhibiting unit 22D including a simple substance of copper and provided to inhibit the adhesion of spatter LS is disposed. Specifically, in the second embodiment, the entire gas injection unit 20 is formed of a simple substance of copper as the adhesion inhibiting unit 22D. The "entire gas injection unit 20" means, in other words, a main body of the air nozzle as the gas injection unit 20.

In the gas injection unit 20 that is a simple substance of copper, for example, thermal conductivity is increased compared to a gas injection unit that is formed of a metal such as steel, a resin, or the like and includes no simple substance of copper. Therefore, even in a case in which the spatter LS adheres to an outer surface of a nozzle unit 21B, the temperature of the spatter LS rapidly decreases, and as a result, the spatter LS is less likely to deposit.

In addition, as shown in Fig. 7, a box-like dust collection mechanism unit 30 has a top portion 31 on the upper side of a dust collection port 30A and a bottom portion 32 on the lower side of the dust collection port 30A. A state in which an adhering material A1 of spatter LS adheres and deposits on an inner surface of the top portion 31 in Fig. 7 is illustrated. A state in which an adhering material A2 of spatter LS adheres and deposits on an end surface of the bottom portion 32 in Fig. 7 is illustrated. A state in which an adhering material A3 of spatter LS adheres and deposits on an outer surface of the nozzle unit 21B in Fig. 7 is illustrated.

The inner surface of the top portion 31 in Fig. 7 is the highest from a steel sheet S in the dust collection mechanism unit 30. In Fig. 7, a height x of the inner surface of the top portion 31 from the steel sheet S and a height y of the upper end of the outer surface of the nozzle unit 21B from the steel sheet S are illustrated. The height x of the inner surface of the top portion 31 from the steel sheet S in Fig. 7 is greater than the height y of the upper end of the nozzle unit 21B from the steel sheet S. That is, x is greater than y (x>y). Therefore, a flow of a gas to be sucked to the dust collection mechanism unit 30 is promoted to be directed to the dust collection mechanism unit 30 by the inclined outer surface with the slope of the nozzle unit 21B. In other words, the inclined outer surface with the slope of the nozzle unit 21B guides the flow of the gas to be sucked.

Here, in grooving in which the depth of a groove G is about from 10 µm to 50 µm, in a case in which an air knife having a flow rate at which spatter is removed from the inside of the groove G at the surface of the steel sheet is used, unlike the disclosure, chips that are particles having a dimension of more than 100 µm are likely to be generated as dust. Since the chips are hardly cooled and hardly superimposed on the flow of air generated by the dust collection mechanism unit 30, the chips easily adhere to the peripheral device.

In a case in which the dust collection mechanism unit is provided on both the upstream side and the downstream side of the irradiation region of the laser light, and the height of the inner surface of the top portion of the dust collection mechanism unit from the steel sheet is greater than the height of the upper end of the nozzle unit from the steel sheet (in other words, x<y in Fig. 7), the flow of the gas sucked to the dust collection mechanism unit 30 is hardly promoted to be directed to the dust collection mechanism unit 30.

On the other hand, in the second embodiment, the dust collection mechanism unit 30 is provided only on the upstream side of the irradiation region SA of the laser light LB in the conveyance direction C of the steel sheet S, and the height x of the inner surface of the top portion 31 from the steel sheet S is greater than the height y of the upper end of the nozzle unit 21B from the steel sheet S. Therefore, in the second embodiment, the deposition rate of the spatter LS on the nozzle unit 21B and the dust collection mechanism unit 30 is lower during continuous use of the laser processing device than in a case in which an air knife is used. For example, in a laser processing device using an air knife without providing the adhesion inhibiting unit, the deposition rate is about 10 mm/hour, whereas in the second embodiment, the deposition rate is suppressed to about 0.1 mm/hour.

In addition, in the second embodiment, the interval between maintenance operations of removing the adhering material adhering and depositing during continuous use of the laser processing device from the nozzle unit 21B and the dust collection mechanism unit 30 is greater than in a case in which an air knife is used. For example, in a laser processing device using an air knife without providing the adhesion inhibiting unit, the interval between maintenance operations is about 30 minutes, whereas in the second embodiment, the interval between maintenance operations is about 3,000 minutes. That is, in the second embodiment, the spatter LS is less likely to be brought into contact with the nozzle unit 21B and the dust collection mechanism unit 30.

### (Actions and Effects of Second Embodiment)

In the second embodiment, on the outer surface of the nozzle unit 21B of the gas injection unit 20, the adhesion inhibiting unit 22D including a simple substance of copper and provided to inhibit the adhesion of spatter LS is disposed. Here, as in Example 2 to be described later, the disclosers have found that, in a case in which the adhesion inhibiting unit 22D including a simple substance of copper is disposed on the outer surface of the nozzle unit 21B of the gas injection unit 20, the effect of suppressing the adhesion of the spatter LS generated from the irradiation region SA to the outer surface of the nozzle unit 21B is greater than in a case in which the adhesion inhibiting unit 22D is not disposed. The spatter LS whose adhesion to the outer surface of the nozzle unit 21B is inhibited by the adhesion inhibiting unit 22D is collected by the dust collection mechanism unit 30. According to the second embodiment, by the adhesion inhibiting unit 22D, it is possible to suppress the adhesion of the spatter LS to the outer surface of the nozzle unit 21B of the gas injection unit 20.

In addition, in the second embodiment, the adhesion inhibiting unit 22D is formed such that the entire gas injection unit 20 is made of a simple substance of copper. As a result, the adhesion inhibiting unit 22D is disposed on the entire outer surface of the nozzle unit 21B. Therefore, it is not necessary to prepare a component different from the gas injection unit 20 as the adhesion inhibiting unit 22D.

### (Fourth Modification Example)

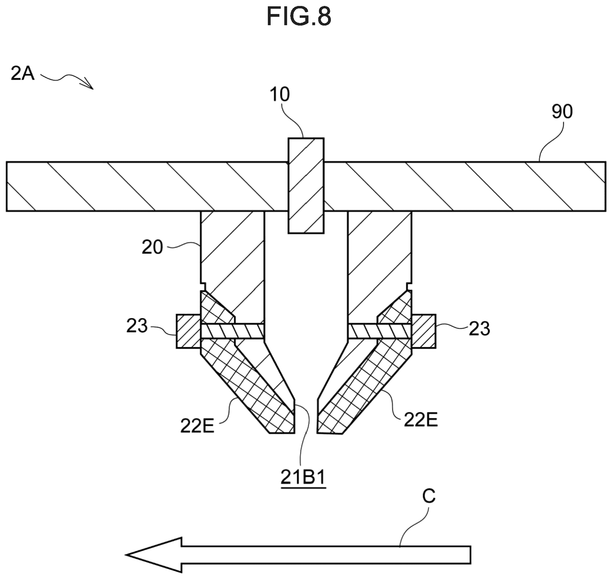

As shown in Fig. 8, a fourth modification example is different from the second embodiment in that a copper sheet 22E formed of a simple substance of copper as an adhesion inhibiting unit is disposed in a gas injection unit 20 in a state of being a separate component from the gas injection unit 20.

Specifically, the gas injection unit 20 of a laser processing device 2A according to the fourth modification example is made of, for example, a metal such as steel or a resin, unlike the gas injection unit 20 formed of a simple substance of copper of the second embodiment. In addition, the adhesion inhibiting unit is a plate-like member disposed on a part of the surface of the gas injection unit 20. In the disclosure, the copper sheet is not limited to being one plate-like member. For example, the copper sheet may be an adhesion inhibiting unit including one copper sheet, a layered body of two or more copper sheets, or the like, and can be used as the copper sheet of the disclosure.

The copper sheet 22E is disposed on an outer surface of a nozzle unit 21B of the gas injection unit 20. In the disclosure, the position where the copper sheet 22E is disposed is not limited thereto, and may be between an irradiation region SA of laser light LB and the gas injection unit 20. The copper sheet 22E is preferably disposed in close contact with the outer surface of the nozzle unit 21B of the gas injection unit 20 from the viewpoint of suppressing the influence from fine vibrations during processing.

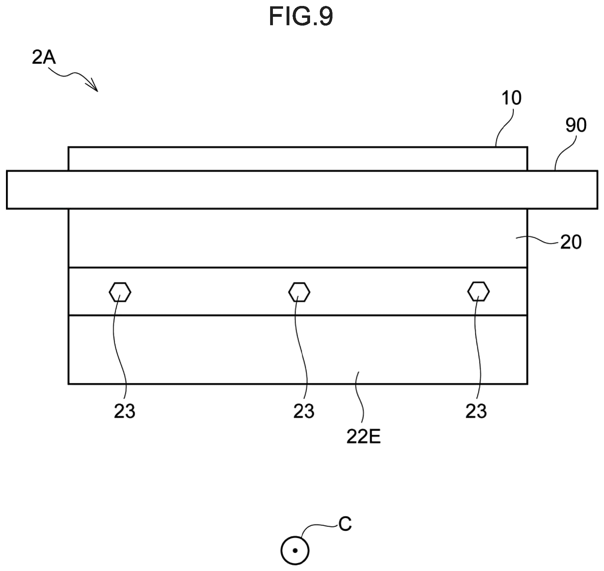

As shown in Fig. 8, the copper sheet 22E is disposed on each of two outer surfaces of the nozzle unit 21B in a conveyance direction C in consideration of the fact that spatter LS easily adheres. As shown in Fig. 9, the copper sheet 22E can be detachably attached to the outer surface of the nozzle unit 21B by a joining tool 23. In Fig. 8, the joining tool 23 is a mechanical tool such as a screw. It is not essential that the copper sheet is disposed on the outer surface of the nozzle unit 21B in a width direction (left-right direction in Fig. 9). In addition, in the disclosure, an adhesion inhibiting unit may be formed by combining a simple substance of carbon and a simple substance of copper. For example, in Fig. 8, the material of the joining tool 23 that joins the copper sheet 22E may consist of a simple substance of carbon.

### (Actions and Effects of Fourth Modification Example)

In the fourth modification example, as in the second embodiment, it is possible to suppress the adhesion of spatter LS to the outer surface of the nozzle unit 21B of the gas injection unit 20 that injects a gas from an opening 21B1 toward the irradiation region SA of the laser light LB. In addition, in the fourth modification example, the adhesion inhibiting unit is a plate-like member disposed on a part of the surface of the gas injection unit 20. That is, the copper sheet 22E formed of a simple substance of copper as an adhesion inhibiting unit is disposed on the entire outer surface of the nozzle unit 21B of the gas injection unit 20 in a state of being a separate component from the gas injection unit 20. In the disclosure, the adhesion inhibiting unit formed of a simple substance of copper may be disposed on at least a part of the outer surface of the nozzle unit of the gas injection unit in a state of being a separate component from the gas injection unit.

Therefore, the adhesion inhibiting unit is easily attached separately to the existing gas injection unit 20 in which no adhesion inhibiting unit is provided. In addition, since the adhesion inhibiting unit is a separate component from the gas injection unit 20, the adhesion inhibiting unit is easily replaced at the time of breakage. Other actions and effects of the fourth modification example are the same as those of the second embodiment.

### (Fifth Modification Example)

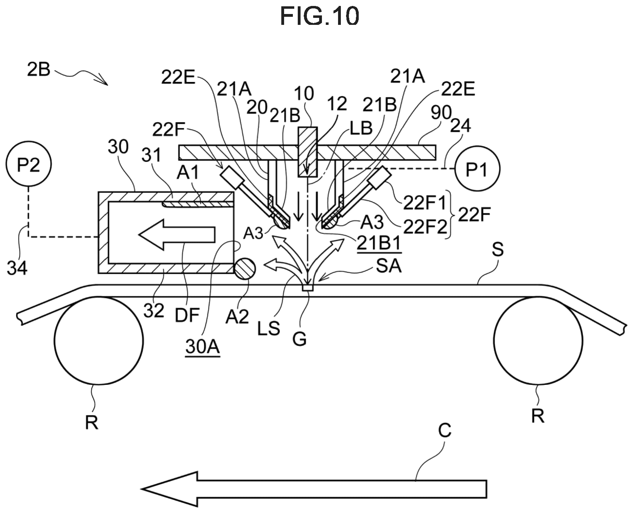

As shown in Fig. 10, a laser processing device 2B according to a fifth modification example is different from that in the fourth modification example in that the copper sheet 22E is disposed on the outer surface of the nozzle unit 21B of the fourth modification example, and a peeling mechanism 22F is further provided as an additional adhesion inhibiting unit. In the disclosure, the use of the peeling mechanism 22F is not limited to the combination with another adhesion inhibiting unit such as the copper sheet 22E, and the peeling mechanism 22F can be used as a single adhesion inhibiting unit.

The peeling mechanism 22F includes a drive portion 22F1 and a movable sheet 22F2. The peeling mechanism 22F can be configured using, for example, a known linear motion mechanism. Although not shown in the drawings, the drive portion 22F1 can be physically supported at an arbitrary position using, for example, an empty space around the gas injection unit 20.

The drive portion 22F1 reciprocates the movable sheet 22F2 along an inclined outer surface with the slope of the nozzle unit 21B. A lower end of the movable sheet 22F2 in Fig. 10 approaches and moves away from the nozzle unit 21B. The movable sheet 22F2 extends along the width direction. In a case in which the movable sheet 22F2 approaches the inclined outer surface with the slope of the nozzle unit 21B, an end edge of a tip of the movable sheet 22F2 opposite to the drive portion 22F1 slides on the outer surface of the nozzle unit 21B, and as a result, an adhering material A3 on the outer surface can be peeled off.

### (Actions and Effects of Fifth Modification Example)

In the fifth modification example, as in the second embodiment, it is possible to suppress the adhesion of spatter LS to the outer surface of the nozzle unit 21B of the gas injection unit 20 that injects a gas from an opening 21B1 toward the irradiation region SA of the laser light LB. In addition, in the fifth modification example, by the peeling mechanism 22F as an additional adhesion inhibiting unit, the movable sheet 22F2 reciprocates along the inclined outer surface with the slope of the nozzle unit 21B. Therefore, it is possible to further suppress the adhesion of the spatter LS to the outer surface of the nozzle unit 21B of the gas injection unit 20. Other actions and effects of the fifth modification example are the same as those of the second embodiment.

### (Sixth Modification Example)

As shown in Fig. 10, a laser processing device 2B according to a sixth modification example is different from that in the fourth modification example in that the copper sheet 22E is disposed on the outer surface of the nozzle unit 21B of the fourth modification example, and a vibration imparting device 22G is further provided as an additional adhesion inhibiting unit. In the disclosure, the use of the vibration imparting device 22G is not limited to the combination with another adhesion inhibiting unit such as the copper sheet 22E, and the vibration imparting device 22G can be used as a single adhesion inhibiting unit.

The vibration imparting device 22G can be configured using, for example, a known vibrator. The vibration imparting device 22G may impart vibrations by, for example, hitting. The vibration imparting device 22G is attached on an outer surface of a base portion 21A of a gas injection unit 20. In the disclosure, the number of vibration imparting devices is one or more and is arbitrary. In addition, the position where the vibration imparting device is attached can be appropriately changed. In the disclosure, it is not essential that the vibration imparting device is attached in a state of being always in contact with the gas injection unit 20. The vibration imparting device may be disposed around the gas injection unit 20 in a state of being separated from the gas injection unit 20. Although not shown in the drawings, the vibration imparting device may have a movable portion that is brought into contact with the gas injection unit as necessary even from a distance, and impart vibrations to the nozzle unit by hitting of the movable portion or the like.

### (Actions and Effects of Sixth Modification Example)

In the sixth modification example, as in the second embodiment, it is possible to suppress the adhesion of spatter LS to the outer surface of the nozzle unit 21B of the gas injection unit 20 that injects a gas from an opening 21B1 toward the irradiation region SA of the laser light LB. In addition, in the sixth modification example, by the vibration imparting device 22G as an additional adhesion inhibiting unit, it is possible to further suppress the adhesion of the spatter LS to the outer surface of the nozzle unit 21B of the gas injection unit 20. Other actions and effects of the sixth modification example are the same as those of the second embodiment.

### (Example 2)

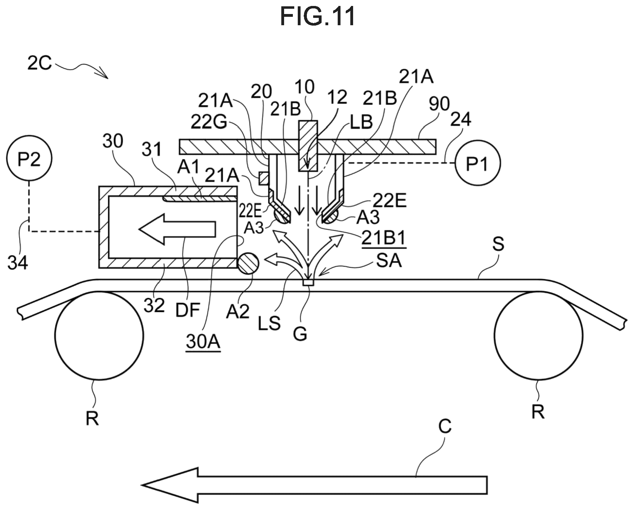

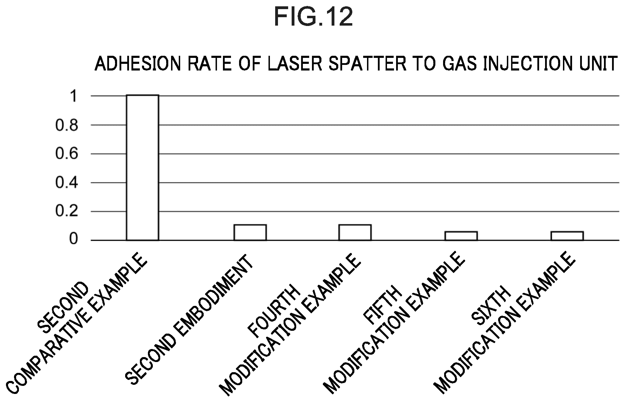

Next, Example 2 in which an adhesion rate of spatter LS is measured using each of the laser processing devices according to the second embodiment and fourth to sixth modification examples illustrated in Figs. 7 to 11 will be described with reference to Fig. 12.

The adhesion rate of spatter LS in Fig. 12 is a ratio of the number of particles of the spatter LS reaching the outer surface of the nozzle unit 21B of the gas injection unit 20 calculated in each of the second embodiment and fourth to sixth modification examples, in a case in which the number of particles of the spatter LS reaching the outer surface of the nozzle unit 21B of the gas injection unit 20 in a second comparative example is set to 1.

A gas injection unit of a laser processing device according to the second comparative example had no adhesion inhibiting unit including a simple substance of copper and provided to inhibit the adhesion of spatter. In addition, the laser processing devices according to the second comparative example, second embodiment, and fourth to sixth modification examples had the same shape and dimensions. In Example 2, a copper sheet 22E attached to the gas injection unit 20 of the fourth to sixth modification examples had a thickness of about 1 mm.

In Example 2, verification was performed through a laboratory test. First, experimental models corresponding to the laser processing devices according to the second comparative example, second embodiment, and fourth to sixth modification examples were set. Then, laser processing, in which a steel sheet was continuously irradiated with laser light LB for about 100 hours, was performed using each of the set experimental models. In each experimental model, the amount of adhesion was calculated by measuring an increase in weight of each part.

As shown in Fig. 12, in the second embodiment, the amount of adhesion of spatter was reduced to about 1/10 of that in the second comparative example. In addition, in the fourth modification example, it was possible to reduce the amount of adhesion of spatter to the same extent as in the second embodiment. In addition, in the fifth modification example, the amount of adhesion of spatter was reduced to about 1/20 of that in the second comparative example. In addition, in the sixth modification example, the amount of adhesion of spatter was reduced to about 1/20 of that in the second comparative example. It was found from Example 2 that, in a case in which an adhesion inhibiting unit made of a simple substance of copper is provided, the amount of adhesion of the spatter LS can be significantly reduced compared to a case in which the adhesion inhibiting unit made of a simple substance of copper is not provided.

Next, the third embodiment will be described. The third embodiment and seventh to ninth modification examples of the third embodiment are different from the second embodiment in that, in the laser processing device 2A according to the fourth modification example of the second embodiment, an adhesion inhibiting unit for inhibiting the adhesion of spatter LS to the dust collection mechanism unit 30 is disposed in the dust collection mechanism unit 30, separately from an adhesion inhibiting unit for inhibiting the adhesion of spatter LS to the gas injection unit 20. Therefore, the configurations in the third embodiment, which are the same as those in the fourth modification example of the second embodiment, will not be described repeatedly.

In the disclosure, it is not essential that the adhesion inhibiting unit for inhibiting the adhesion of spatter LS to the dust collection mechanism unit 30 is used in combination with the adhesion inhibiting unit for the gas injection unit 20. The adhesion inhibiting unit for inhibiting the adhesion of spatter LS to the dust collection mechanism unit 30 may be used without the adhesion inhibiting unit for inhibiting the adhesion of spatter LS to the gas injection unit 20.

### <Third Embodiment>

### (Adhesion Inhibiting unit)

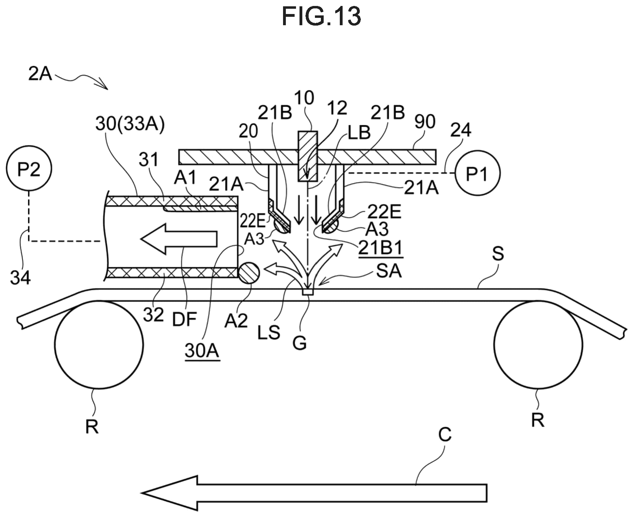

As shown in Fig. 13, on an outer surface of a dust collection mechanism unit 30 of a laser processing device 2A according to the third embodiment, an adhesion inhibiting unit 33A including a simple substance of copper and provided to inhibit the adhesion of spatter LS is disposed. In each of the third embodiment and a modification example of the third embodiment, the adhesion inhibiting unit provided in the dust collection mechanism unit 30 corresponds to a second adhesion inhibiting unit of the disclosure. Specifically, in the third embodiment, the entire dust collection mechanism unit 30 is formed of a simple substance of copper as the adhesion inhibiting unit 33A. The "entire dust collection mechanism unit 30" means, in other words, a main body of the dust collection nozzle as the dust collection mechanism unit 30.

In the dust collection mechanism unit 30 that is a simple substance of copper, for example, thermal conductivity is increased compared to a dust collection mechanism unit that is formed of a metal such as steel, a resin, or the like and includes no simple substance of copper. Therefore, even in a case in which the spatter LS adheres to an inner surface and an end surface of the dust collection mechanism unit 30, the temperature of the spatter LS rapidly decreases, and as a result, the spatter LS is less likely to deposit. The inner surface and the end surface of the dust collection mechanism unit 30 of the third embodiment correspond to the "surface of the dust collection mechanism unit" where the adhesion of the spatter LS is inhibited by the second adhesion inhibiting unit of the disclosure.

### (Actions and Effects of Third Embodiment)

In the third embodiment, on the inner surface and the end surface of the dust collection mechanism unit 30, the adhesion inhibiting unit 33A including a simple substance of copper and provided to inhibit the adhesion of spatter LS is disposed. Here, as in Example 3 to be described later, the disclosers have found that, in a case in which the adhesion inhibiting unit including a simple substance of copper is disposed on the inner surface and the end surface of the dust collection mechanism unit 30, the effect of suppressing the adhesion of the spatter LS generated from the irradiation region SA to the inner surface and the end surface of the dust collection mechanism unit 30 is greater than in a case in which the adhesion inhibiting unit is not disposed. According to the third embodiment, by the adhesion inhibiting unit 33A, it is possible to suppress the adhesion of the spatter LS to the inner surface and the end surface of the dust collection mechanism unit 30. As a result, it is possible to reduce the burden of the maintenance operation for removing the adhering material.

In addition, in the third embodiment, the adhesion inhibiting unit 33A is formed such that the entire dust collection mechanism unit 30 is made of a simple substance of copper. As a result, the adhesion inhibiting unit 33A is disposed on the entirety of the inner surface and the end surface of the dust collection mechanism unit 30. Therefore, it is not necessary to prepare a component different from the dust collection mechanism unit 30 as the adhesion inhibiting unit 33A.

### (Seventh Modification Example)

As shown in Fig. 8, a seventh modification example is different from the third embodiment in that a copper sheet 33B formed of a simple substance of copper as an adhesion inhibiting unit is disposed in a dust collection mechanism unit 30 in a state of being a separate component from the dust collection mechanism unit 30.

Specifically, the dust collection mechanism unit 30 of a laser processing device 2A according to the seventh modification example is made of, for example, a metal such as steel or a resin, unlike the dust collection mechanism unit 30 formed of a simple substance of copper of the third embodiment. In addition, the adhesion inhibiting unit is a plate-like member disposed on a part of the surface of the dust collection mechanism unit 30. In the disclosure, the copper sheet is not limited to being one plate-like member. For example, the copper sheet may be an adhesion inhibiting unit including one copper sheet, a layered body of two or more copper sheets, or the like, and can be used as the copper sheet of the disclosure.

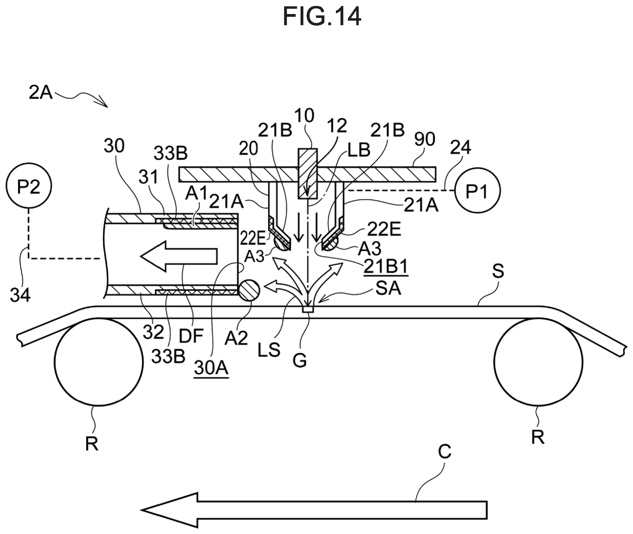

The copper sheet 33B is disposed on both the inner surface and the end surface of the dust collection mechanism unit 30. In the disclosure, the position where the copper sheet 33B is disposed may be disposed on at least one of the inner surface or the end surface of the dust collection mechanism unit 30. As shown in Fig. 14, the copper sheet 33B is disposed on each of the inner surface of the dust collection mechanism unit 30 to which an adhering material A1 adheres and the end surface of the dust collection mechanism unit 30 to which an adhering material A2 adheres. In Fig. 14, a state in which a lower surface of the copper sheet 33B on the upper side is arranged to be flush with the inner surface of the dust collection mechanism unit 30 and a lower surface of the copper sheet 33B on the lower side is arranged to be flush with the outer surface of the dust collection mechanism unit 30 is illustrated, but the disclosure is not limited thereto. A step may be formed between the surface of the copper sheet and the surface of the dust collection mechanism unit 30.

### (Actions and Effects of Seventh Modification Example)

In the seventh modification example, the adhesion inhibiting unit is a plate-like member disposed on a part of the surface of the dust collection mechanism unit 30. That is, the copper sheet 33B formed of a simple substance of copper as an adhesion inhibiting unit is disposed on both the inner surface and the end surface of the dust collection mechanism unit 30 in a state of being a separate component from the dust collection mechanism unit 30. Therefore, the adhesion inhibiting unit is easily attached separately to the existing dust collection mechanism unit 30 in which no adhesion inhibiting unit is provided. Other actions and effects of the seventh modification example are the same as those of the third embodiment.

### (Eighth Modification Example)

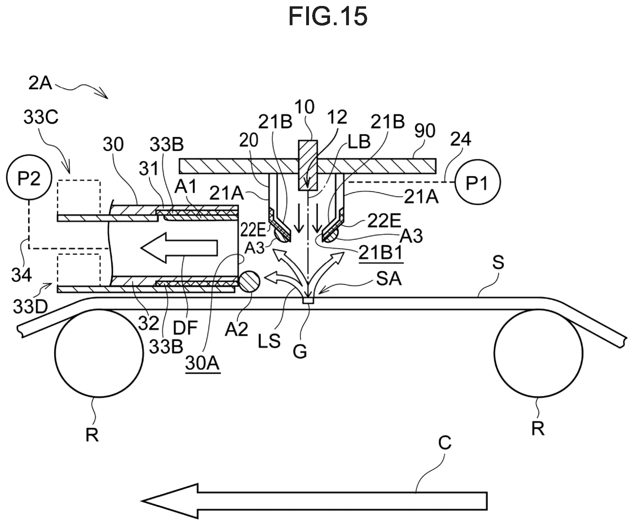

As shown in Fig. 15, a laser processing device 2A according to an eighth modification example is different from that in the seventh modification example in that the copper sheet 33B is disposed on the inner surface and the end surface of the dust collection mechanism unit 30 of the seventh modification example, and a first peeling mechanism 33C and a second peeling mechanism 33D are further provided as additional adhesion inhibiting units. In the disclosure, the use of the first peeling mechanism 33C and the second peeling mechanism 33D is not limited to the combination with another adhesion inhibiting unit such as the copper sheet 33B, and each of the first peeling mechanism 33C and the second peeling mechanism 33D can be used as a single adhesion inhibiting unit.

### (First Peeling Mechanism)

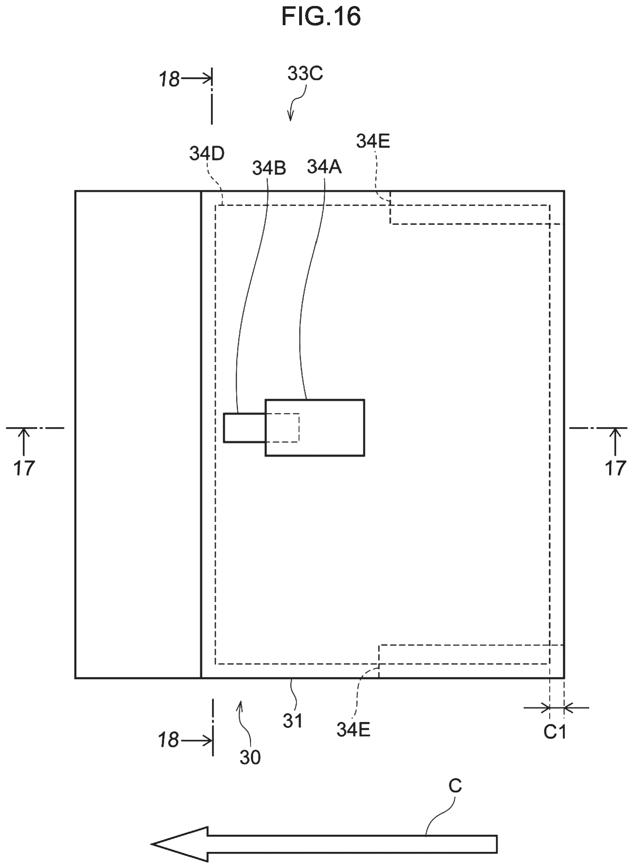

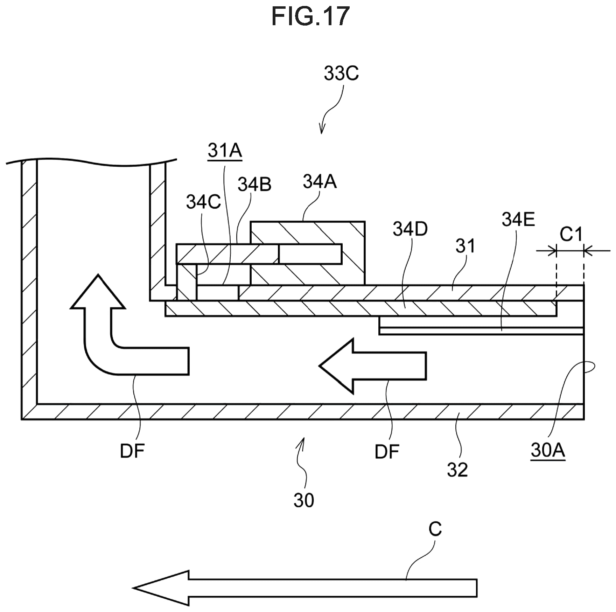

As shown in Figs. 16 and 17, the first peeling mechanism 33C includes a drive portion 34A, a shaft 34B, a connection portion 34C, a movable sheet 34D, and a support portion 34E. As shown in Fig. 17, the dust collection mechanism unit 30 has an L-shape. A suction airstream DF enters the inside of the dust collection mechanism unit 30 from a dust collection port 30A, and then moves upward from the periphery of a side wall 30B on the left side facing the dust collection port 30A on the right side in Fig. 17.

The drive portion 34A is provided on an outer surface of a top portion 31. As shown in Fig. 16, the movable sheet 34D extends along the width direction. As shown in Fig. 17, an upper end of the connection portion 34C is attached to a left end of the shaft 34B, and a lower end of the connection portion 34C is attached to a left end of the movable sheet 34D.

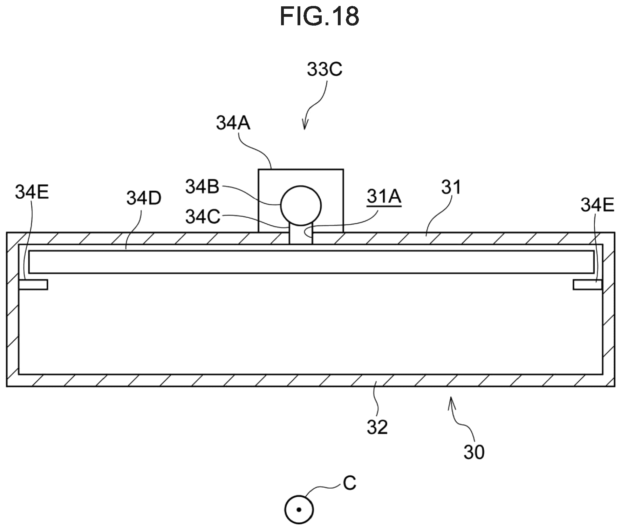

As shown in Fig. 18, in the top portion 31, a slit 31A is formed into which the rod-like connection portion 34C is inserted. As shown in Figs. 16 to 18, the support portion 34E is a plate-like member provided on each of the inner surfaces of the side walls facing each other in the width direction inside the dust collection mechanism unit 30 in a state of horizontally protruding inward from the inner surface. The support portion 34E supports the sliding movable sheet 34D from below. In the disclosure, the support portion is not essential.

The drive portion 34A and the shaft 34B can include, for example, a known linear motion mechanism such as an air cylinder having a piston rod or a screw feeding mechanism. The drive portion 34A can horizontally reciprocate the movable sheet 34D along the inner surface of the top portion 31 of the dust collection mechanism unit 30 in Fig. 17 via the shaft 34B and the connection portion 34C. A right end of the movable sheet 34D in Fig. 17 is movable toward the outer side, which is further on the right side of the dust collection port 30A. In a standby state in which the maintenance operation for removing the adhering material is not performed, the right end of the movable sheet 34D in Fig. 17 is separated from the dust collection port 30A. In Fig. 17, a standby distance C1 of the movable sheet 34D is illustrated.

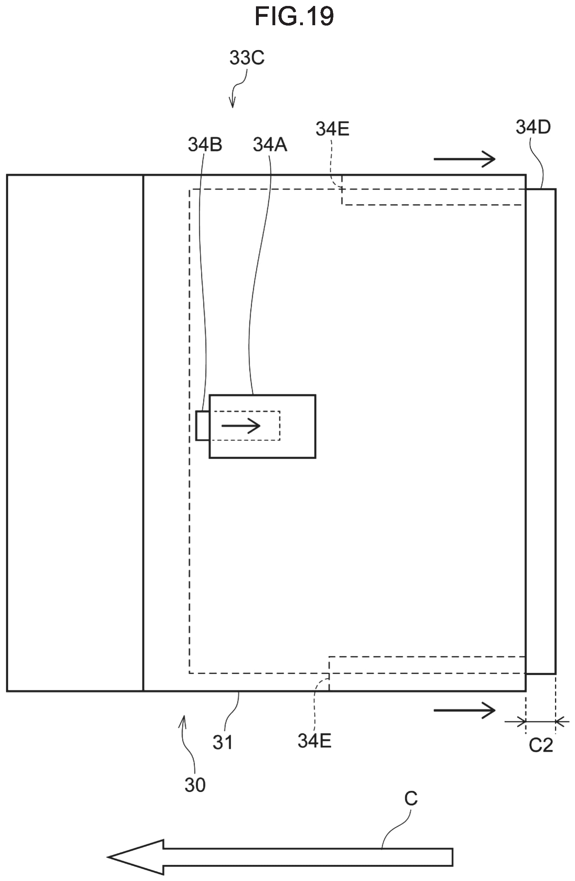

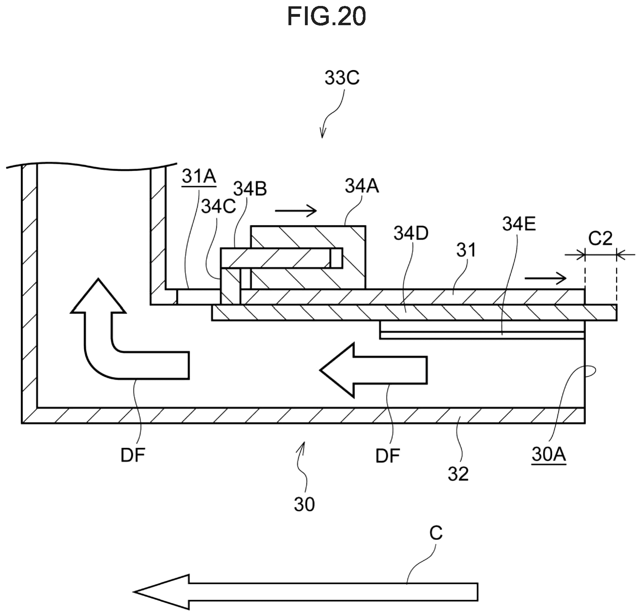

As shown in Fig. 19, in a case in which the drive portion 34A moves the shaft 34B to the right side, the connection portion 34C moves to the right side in the slit 31A in conjunction with the shaft 34B. As shown in Fig. 20, the right end of the movable sheet 34D slides on the inner surface of the top portion 31 of the dust collection mechanism unit 30 in conjunction with the movement of the connection portion 34C. An adhering material A1 on the inner surface is extruded outward from the dust collection port 30A by sliding, and as a result, the adhering material A1 can be peeled off. In Fig. 20, an extrusion distance C2 of the movable sheet 34D is illustrated.

### (Second Peeling Mechanism)

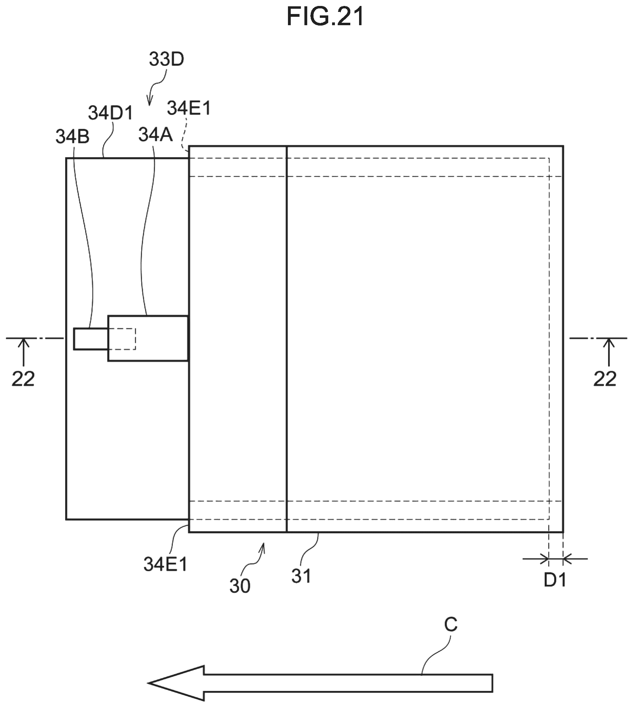

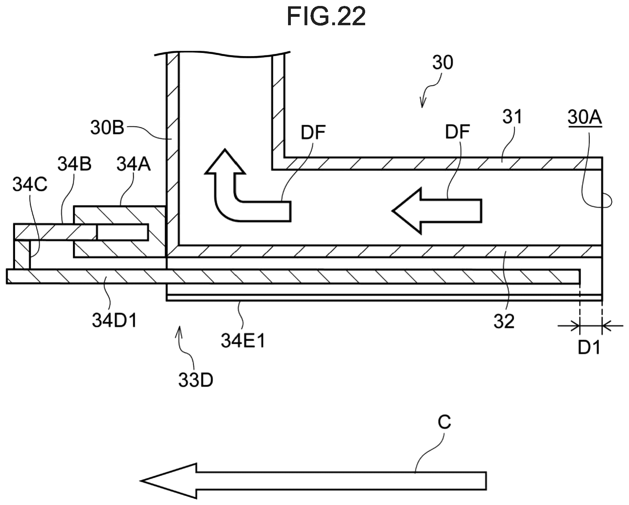

As shown in Figs. 21 and 22, the second peeling mechanism 33D includes a drive portion 34A, a shaft 34B, a connection portion 34C, a movable sheet 34D1, and a support portion 34E1. The drive portion 34A is provided on an outer surface of the side wall 30B on the left side of the dust collection mechanism unit 30 in Fig. 22. As shown in Fig. 21, the movable sheet 34D1 extends along the width direction. As shown in Fig. 22, an upper end of the connection portion 34C is attached to a left end of the shaft 34B, and a lower end of the connection portion 34C is attached to a left end of the movable sheet 34D1.

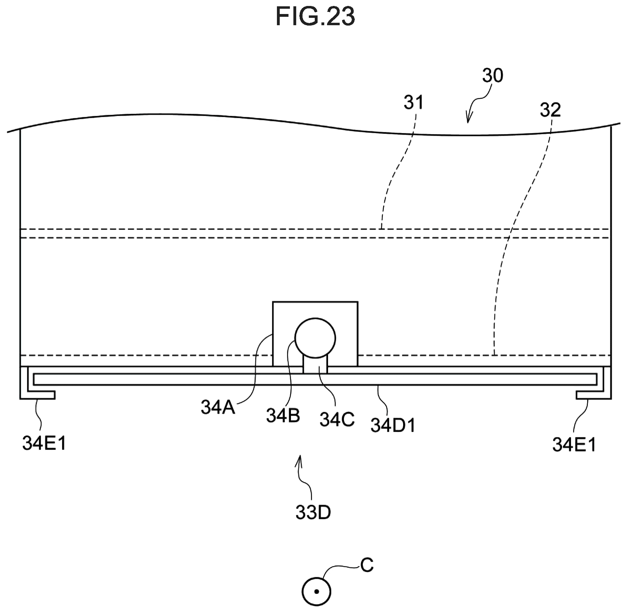

As shown in Figs. 21 to 23, the support portion 34E1 is a plate-like member having an L-shaped cross section, provided at each of the end portions in the width direction on an outer surface (that is, a lower surface of a bottom portion 32 in Fig. 23) of the bottom portion 32 of the dust collection mechanism unit 30. As shown in Fig. 23, one end portion (that is, upper end) of the plate-like member having an L-shaped cross section is attached to the lower surface of the bottom portion 32, and the other end portion (that is, inner end) extends inward in the width direction. The support portion 34E1 supports the sliding movable sheet 34D1 from below at an inner portion of the L shape. In the disclosure, the support portion is not essential.

The drive portion 34A and the shaft 34B can include, for example, a known linear motion mechanism such as an air cylinder having a piston rod or a screw feeding mechanism. The drive portion 34A can horizontally reciprocate the movable sheet 34D1 along the outer surface of the bottom portion 32 of the dust collection mechanism unit 30 in Fig. 22 via the shaft 34B and the connection portion 34C. A right end of the movable sheet 34D1 in Fig. 22 is movable toward the outer side, which is further on the right side of the dust collection port 30A. In a standby state in which the maintenance operation for removing the adhering material is not performed, the right end of the movable sheet 34D1 in Fig. 22 is separated from the dust collection port 30A. In Fig. 22, a standby distance D1 of the movable sheet 34D1 is illustrated.

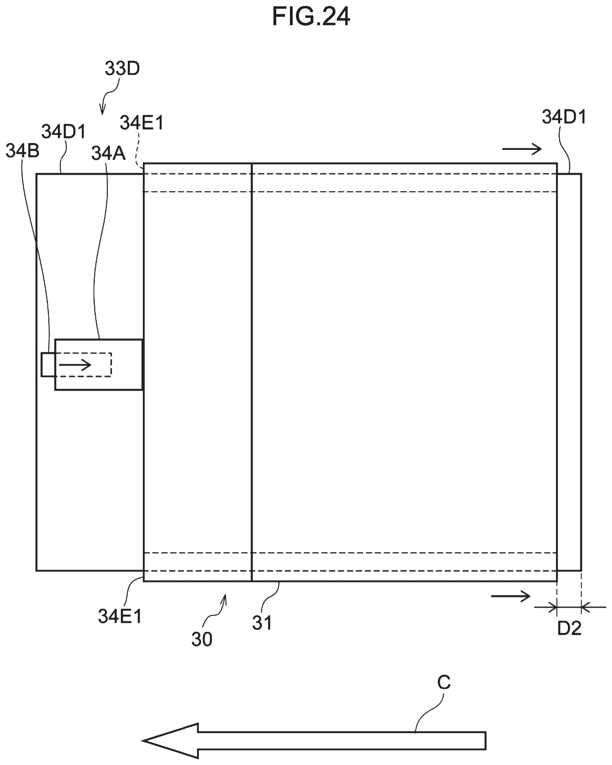

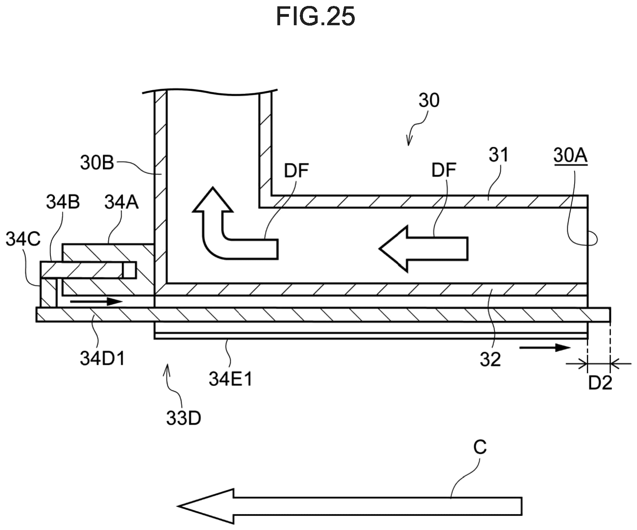

As shown in Fig. 24, in a case in which the drive portion 34A moves the shaft 34B to the right side, the connection portion 34C moves to the right side in conjunction with the shaft 34B. As shown in Fig. 25, the right end of the movable sheet 34D1 protrudes outward beyond the end surface of the bottom portion 32 of the dust collection mechanism unit 30 in conjunction with the movement of the connection portion 34C. An adhering material A2 on the end surface is extruded outward beyond the position of the dust collection port 30A by sliding, and as a result, the adhering material A2 can be peeled off. In Fig. 25, an extrusion distance D2 of the movable sheet 34D1 is illustrated.

### (Actions and Effects of Eighth Modification Example)

In the eighth modification example, by the first peeling mechanism 33C and the second peeling mechanism 33D as additional adhesion inhibiting units, the movable sheet reciprocates along the surface of the dust collection mechanism unit 30. Therefore, it is possible to further suppress the adhesion of spatter LS to the inner surface and the end surface of the dust collection mechanism unit 30. Other actions and effects of the eighth modification example are the same as those of the second embodiment.

### (Ninth Modification Example)

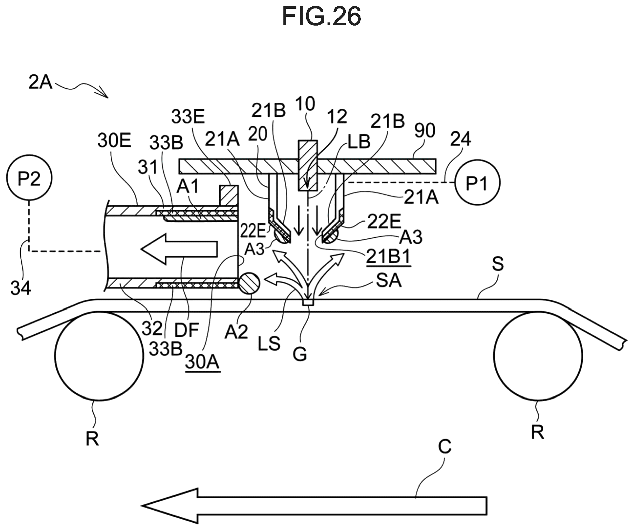

As shown in Fig. 26, a laser processing device 2A according to a ninth modification example is different from that in the seventh modification example in that the copper sheet 33B is disposed on the inner surface and the end surface of the dust collection mechanism unit 30 of the seventh modification example, and a vibration imparting device 33E is further provided as an additional adhesion inhibiting unit. In the disclosure, the use of the vibration imparting device 33E is not limited to the combination with another adhesion inhibiting unit such as the copper sheet 33B, and the vibration imparting device 33E can be used as a single adhesion inhibiting unit.

The vibration imparting device 33E can be configured using, for example, a known vibrator. The vibration imparting device 33E may impart vibrations by, for example, hitting. The vibration imparting device 33E is attached on an outer surface of a top portion 31 of a dust collection mechanism unit 30. In the disclosure, the number of vibration imparting devices is one or more and is arbitrary. In addition, the position where the vibration imparting device is attached can be appropriately changed. In the disclosure, it is not essential that the vibration imparting device is attached in a state of being always in contact with the dust collection mechanism unit 30. The vibration imparting device may be disposed around the dust collection mechanism unit 30 in a state of being separated from the dust collection mechanism unit 30. Although not shown in the drawings, the vibration imparting device may have a movable portion that is brought into contact with the dust collection mechanism unit as necessary even from a distance, and impart vibrations to the nozzle unit by hitting of the movable portion or the like.

### (Actions and Effects of Ninth Modification Example)

In the ninth modification example, by the vibration imparting device 33E as an additional adhesion inhibiting unit, it is possible to further suppress the adhesion of the spatter LS to the inner surface and the end surface of the dust collection mechanism unit 30. Other actions and effects of the ninth modification example are the same as those of the third embodiment.

### (Example 3)

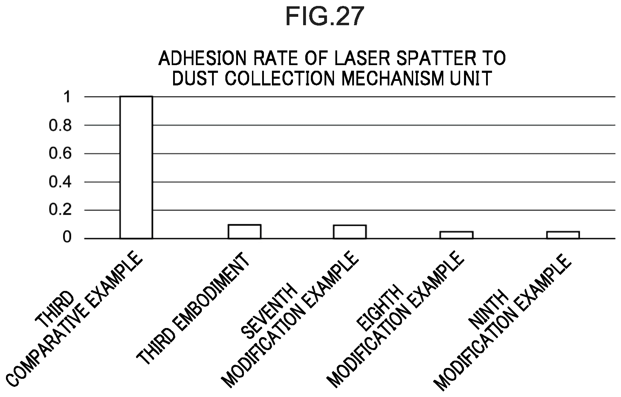

Next, Example 3 in which an adhesion rate of spatter LS is measured using each of the laser processing devices according to the third embodiment and seventh to ninth modification examples illustrated in Figs. 13 to 15 and 26 will be described with reference to Fig. 27.

The adhesion rate of spatter LS in Fig. 27 is a ratio of the number of particles of the spatter LS reaching the inner surface and the end surface of the dust collection mechanism unit 30 calculated in each of the third embodiment and seventh to ninth modification examples, in a case in which the number of particles of the spatter LS reaching the inner surface and the end surface of the dust collection mechanism unit 30 in a third comparative example is set to 1.

A dust collection mechanism unit of a laser processing device according to the third comparative example had no adhesion inhibiting unit including a simple substance of copper and provided to inhibit the adhesion of spatter. In addition, the laser processing devices according to the third comparative example, third embodiment, and seventh to ninth modification examples had the same shape and dimensions. In Example 3, a copper sheet 33B attached to the dust collection mechanism unit 30 of the seventh to ninth modification examples had a thickness of about 1 mm.

In Example 3, verification was performed through a laboratory test. First, experimental models corresponding to the laser processing devices according to the third comparative example, third embodiment, and seventh to ninth modification examples were set. Then, laser processing, in which a steel sheet was continuously irradiated with laser light LB for about 100 hours, was performed using each of the set experimental models. In each experimental model, the amount of adhesion was calculated by measuring an increase in weight of each part.

As shown in Fig. 27, in the third embodiment, the amount of adhesion of spatter was reduced to about 1/10 of that in the third comparative example. In addition, in the seventh modification example, it was possible to reduce the amount of adhesion of spatter to the same extent as in the third embodiment. In addition, in the eighth modification example, the amount of adhesion of spatter was reduced to about 1/20 of that in the third comparative example. In addition, in the ninth modification example, the amount of adhesion of spatter was reduced to about 1/20 of that in the third comparative example. It was found from Example 3 that, in a case in which an adhesion inhibiting unit made of a simple substance of copper is provided, the amount of adhesion of the spatter LS can be significantly reduced compared to a case in which the adhesion inhibiting unit made of a simple substance of copper is not provided.

### <Other Embodiments>

Although the disclosure has been described with reference to the above disclosed embodiments, it should not be understood that the description and drawings constituting a part of the disclosure limit the disclosure. It should be understood that various alternative embodiments, examples, and operation techniques will become apparent to those skilled in the art from the disclosure.

For example, the disclosure can include partially combining the configurations illustrated in the accompanying drawings. As described above, the disclosure includes various embodiments and the like that are not described above, and the technical scope of the disclosure is defined only by the matters specifying the invention in the claims that are appropriate from the above description.

### <<Supplementary Note>>

From the specification, the following aspects are conceptualized.

According to Aspect 1,
provided is a laser processing device including:
a gas injection unit that injects a gas from an opening toward an irradiation region of laser light on a surface of a steel sheet, the gas injection unit having a nozzle unit that includes an outer surface with a slope inclined so as to approach a center of the opening from an outer side of the opening in a direction parallel to the surface of the steel sheet on progression from a side opposite to the opening toward an opening side in an injection direction, in which a first adhesion inhibiting unit for inhibiting adhesion of laser spatter is disposed on at least a part of the outer surface of the nozzle unit.

According to Aspect 2,
provided is the laser processing device according to Aspect 1,
in which the first adhesion inhibiting unit includes a simple substance of carbon or a simple substance of copper.

According to Aspect 3,
provided is the laser processing device according to Aspect 2,
in which the first adhesion inhibiting unit is formed such that the entire gas injection unit including the nozzle unit is made of the simple substance of carbon or the simple substance of copper.

According to Aspect 4,
provided is the laser processing device according to Aspect 2,
in which the first adhesion inhibiting unit is a plate-like member disposed on the at least a part of the outer surface of the nozzle unit of the gas injection unit.

According to Aspect 5,
provided is the laser processing device according to any one of Aspects 1 to 4,
in which the first adhesion inhibiting unit includes a charge applying device that applies a charge having the same polarity as a charge of the laser spatter to the gas injection unit.

According to Aspect 6,
provided is the laser processing device according to any one of Aspects 1 to 5, further including:
a coating agent supply device that supplies a coating agent for coating the laser spatter.

According to Aspect 7,
provided is the laser processing device according to any one of Aspects 1 to 6,
in which the gas injection unit injects the gas in parallel with an optical axis direction of the laser light.

According to Aspect 8,
provided is the laser processing device according to any one of Aspects 1 to 7, further including:
a conveyance roll that conveys a steel sheet in a preset conveyance direction; and
a laser light source unit that irradiates a surface of the steel sheet conveyed in the conveyance direction with the laser light.

According to Aspect 9,
provided is the laser processing device according to Aspect 8, further including:
a dust collection mechanism unit that is provided only on either one of an upstream side or a downstream side of the irradiation region in the conveyance direction and collects the laser spatter from a dust collection port.

According to Aspect 10,
provided is the laser processing device according to Aspect 9,
in which the dust collection mechanism unit is provided with a second adhesion inhibiting unit for inhibiting adhesion of the laser spatter to a surface of the dust collection mechanism unit.

According to Aspect 11,
provided is a laser processing method including:
irradiating a surface of a steel sheet with laser light; and
using a gas injection unit having a nozzle unit that includes an outer surface with a slope inclined so as to approach a center of an opening from an outer side of the opening in a direction parallel to the surface of the steel sheet on progression from a side opposite to the opening toward an opening side in an injection direction, in which an adhesion inhibiting unit for inhibiting adhesion of laser spatter is disposed on at least a part of the outer surface of the nozzle unit, to inject a gas from the opening toward an irradiation region of the laser light so as to lift the laser spatter generated from the irradiation region from the surface of the steel sheet.

### <<Other Aspects>>

In addition, the following other aspects are conceptualized from the specification.

According to another Aspect 1,
provided is a laser processing device including:
a laser light source unit that irradiates a surface of a steel sheet conveyed in a preset conveyance direction with laser light; and
a gas injection unit that injects a gas in parallel with an optical axis direction of the laser light toward an irradiation region of the laser light, the gas injection unit with a surface on which an adhesion inhibiting unit that includes a simple substance of carbon and inhibits adhesion of laser spatter is disposed.

According to another Aspect 2,
provided is the laser processing device according to Aspect 1,
in which the adhesion inhibiting unit is formed such that the entire gas injection unit is made of the simple substance of carbon.

According to another Aspect 3,
provided is the laser processing device according to Aspect 1,
in which the adhesion inhibiting unit is a plate-like member disposed on a part of the surface of the gas injection unit.

According to another Aspect 4,
provided is the laser processing device according to any one of Aspects 1 to 3, further including:
a charge applying device that applies a charge having the same polarity as a charge of the laser spatter to the gas injection unit.

According to another Aspect 5,
provided is the laser processing device according to any one of Aspects 1 to 4, further including:
a coating agent adding device that adds a coating agent for coating the laser spatter.

According to another Aspect 6,
provided is a laser processing method including:
irradiating a surface of a steel sheet conveyed in a preset conveyance direction with laser light using a laser light source unit; and
injecting a gas in parallel with an optical axis direction of the laser light toward an irradiation region of the laser light using a gas injection unit with a surface on which an adhesion inhibiting unit that includes a simple substance of carbon and inhibits adhesion of laser spatter is disposed, to lift laser spatter generated from the irradiation region from the surface of the steel sheet.

According to other aspects, the laser spatter collection efficiency can be increased, and the adhesion of laser spatter can be prevented over the sheet width direction.

The disclosure of Japanese Patent Application No. 2023-149623 filed on September 14, 2023 is incorporated herein by reference in its entirety. In addition, all documents, patent applications, and technical standards described herein are incorporated herein by reference to the same extent as if each individual document, patent application, and technical standard were specifically and individually indicated to be incorporated by reference.

- 1, 1A to 1C: Laser processing device
- 2, 2A to 2C: Laser processing device
- 10: Laser light source unit
- 12: Emission portion
- 20: Gas injection unit
- 20A: Gas
- 21A: Vertical portion
- 21B: Nozzle unit
- 21B1: Opening
- 22A: Adhesion inhibiting unit (first adhesion inhibiting unit)
- 22B: Carbon plate (first adhesion inhibiting unit)
- 22C: Charge (first adhesion inhibiting unit)
- 22D: Adhesion inhibiting unit (first adhesion inhibiting unit)
- 22E: Copper sheet (first adhesion inhibiting unit)
- 23: Joining tool
- 24: Air supply duct
- 22F: Peeling mechanism (first adhesion inhibiting unit)
- 22F1: Drive portion
- 22F2: Movable sheet
- 22G: Vibration mechanism (first adhesion inhibiting unit)
- 33A: Adhesion inhibiting unit (second adhesion inhibiting unit)
- 33B: Copper sheet (second adhesion inhibiting unit)
- 33C: First peeling mechanism (second adhesion inhibiting unit)
- 33D: Second peeling mechanism (second adhesion inhibiting unit)
- 34A: Drive portion
- 34B: Shaft
- 34C: Connection portion
- 34D: Movable sheet
- 34E: Support portion
- 30: Dust collection mechanism unit
- 30A: Dust collection port
- 30B: Side wall
- 31: Top portion
- 31A: Slit
- 32: Bottom portion
- 33E: Vibration mechanism (second adhesion inhibiting unit)
- 34: Dust collection duct
- 40: Charge applying device
- 42: Power source
- 44: Electric wire
- 50: Coating agent supply device
- 52: Coating agent source
- 54: Supply pipe
- 56: Supply nozzle
- 90: Top board
- A1 to A3: Adhering material
- C: Conveyance direction
- C1: Standby distance
- C2: Extrusion distance
- D1: Standby distance
- D2: Extrusion distance
- DF: Suction airstream
- G: Groove
- LB: Laser light
- LS: Spatter (laser spatter)
- P1: Air supply pump
- P2: Suction pump
- R: Conveyance roll
- S: Steel sheet
- SA: Irradiation region
- x: Height from steel sheet to uppermost portion of inner wall surface of dust collection mechanism unit
- y: Height from steel sheet to uppermost portion of nozzle unit of gas injection unit

## Claims

1. A laser processing device comprising:
a gas injection unit that injects a gas from an opening toward an irradiation region of laser light on a surface of a steel sheet, the gas injection unit having a nozzle unit that includes an outer surface with a slope inclined so as to approach a center of the opening from an outer side of the opening in a direction parallel to the surface of the steel sheet on progression from a side opposite to the opening toward an opening side in an injection direction, in which a first adhesion inhibiting unit for inhibiting adhesion of laser spatter is disposed on at least a part of the outer surface of the nozzle unit.

2. The laser processing device according to Claim 1,
wherein the first adhesion inhibiting unit includes a simple substance of carbon or a simple substance of copper.

3. The laser processing device according to Claim 2,
wherein the first adhesion inhibiting unit is formed such that the entire gas injection unit including the nozzle unit is made of the simple substance of carbon or the simple substance of copper.

4. The laser processing device according to Claim 2,
wherein the first adhesion inhibiting unit is a plate-like member disposed on the at least a part of the outer surface of the nozzle unit of the gas injection unit.

5. The laser processing device according to any one of Claims 1 to 4,
wherein the first adhesion inhibiting unit includes a charge applying device that applies a charge having the same polarity as a charge of the laser spatter to the gas injection unit.

6. The laser processing device according to any one of Claims 1 to 5, further comprising:
a coating agent supply device that supplies a coating agent for coating the laser spatter.

7. The laser processing device according to any one of Claims 1 to 6,
wherein the gas injection unit injects the gas in parallel with an optical axis direction of the laser light.

8. The laser processing device according to any one of Claims 1 to 7, further comprising:
a conveyance roll that conveys the steel sheet in a preset conveyance direction; and
a laser light source unit that irradiates the surface of the steel sheet conveyed in the conveyance direction with the laser light.

9. The laser processing device according to Claim 8, further comprising:
a dust collection mechanism unit that is provided only on either one of an upstream side or a downstream side of the irradiation region in the conveyance direction and collects the laser spatter from a dust collection port.

10. The laser processing device according to Claim 9,
wherein the dust collection mechanism unit is provided with a second adhesion inhibiting unit for inhibiting adhesion of the laser spatter to a surface of the dust collection mechanism unit.

11. A laser processing method comprising:
irradiating a surface of a steel sheet with laser light; and
using a gas injection unit having a nozzle unit that includes an outer surface with a slope inclined so as to approach a center of an opening from an outer side of the opening in a direction parallel to the surface of the steel sheet on progression from a side opposite to the opening toward an opening side in an injection direction, in which an adhesion inhibiting unit for inhibiting adhesion of laser spatter is disposed on at least a part of the outer surface of the nozzle unit, to inject a gas from the opening toward an irradiation region of the laser light so as to lift the laser spatter generated from the irradiation region from the surface of the steel sheet.
